(19) **Europäisches Patentamt**

**European Patent Office**

**Office européen des brevets**

(11) **EP 0 577 365 B1**

(12) **EUROPEAN PATENT SPECIFICATION**

(45) Date of publication and mention
of the grant of the patent:
**05.04.2000 Bulletin 2000/14**

(51) Int. Cl.[7]: **H04N 7/30**, H04N 7/36,
H04N 7/26, H04N 7/46,
H04N 7/50

(21) Application number: **93305029.6**

(22) Date of filing: **28.06.1993**

(54) **Encoding of picture signals**

Bildsignalkodierung

Codage de signaux d'image

(84) Designated Contracting States:
**AT DE ES FR GB IT NL**

(30) Priority: **29.06.1992 JP 17032492**
**28.07.1992 JP 21963392**

(43) Date of publication of application:
**05.01.1994 Bulletin 1994/01**

(73) Proprietor: **SONY CORPORATION**
**Tokyo 141 (JP)**

(72) Inventors:
• **Igarashi, Katsuji,**
**c/o Patents Division**
**Shinagawa-ku, Tokyo 141 (JP)**
• **Yonemitsu, Jun,**
**c/o Patents Division**
**Shinagawa-ku, Tokyo 141 (JP)**
• **Yagasaki, Yoichi,**
**c/o Patents Division**
**Shinagawa-ku, Tokyo 141 (JP)**
• **Fujinami, Yasushi,**
**c/o Patents Division**
**Shinagawa-ku, Tokyo 141 (JP)**
• **Sato, Tomoyuki,**
**c/o Patents Division**
**Shinagawa-ku, Tokyo 141 (JP)**
• **Kato, Motoki,**
**c/o Patents Division**
**Shinagawa-ku, Tokyo 141 (JP)**
• **Suzuki, Teruhiko,**
**c/o Patents Division**
**Shinagawa-ku, Tokyo 141 (JP)**

(74) Representative:
**Robinson, Nigel Alexander Julian et al**
**D. Young & Co.,**
**21 New Fetter Lane**
**London EC4A 1DA (GB)**

(56) References cited:
**EP-A- 0 441 168**　　**EP-A- 0 467 718**
**EP-A- 0 484 140**　　**US-A- 4 546 386**
**US-A- 5 091 782**

• **IEEE INTERNATIONAL CONFERENCE ON COMMUNICATIONS ICC'90, vol. 3, 15 April 1990 ATLANTA, pages 1049-1053, OKUMURA ET AL. 'High Quality Transmission System Design for HDTV Signals'**
• **SIGNAL PROCESSING OF HDTV,II, 30 August 1989 TURIN, pages 739-748, KUTKA 'Block adaptive frame/field DCT coding decided by the vertical difference test'**
• **IMAGE PROCESSING ALGORITHMS AND TECHNIQUES, 12 February 1990 SANTA CLARA, CALIFORNIA, pages 389-405, PLOMPEN ET AL. 'Motion video coding; An universal coding approach'**

**Description**

This invention relates to a method and an apparatus for encoding of image signals by orthogonal transformation.

As a system for the high efficiency encoding of image signals, the Moving Picture Experts Group (MPEG) has proposed a draft standardization which prescribes a high efficiency encoding arrangement for picture signals for digital storage media. The storage media contemplated in the proposed arrangement are those having a continuous transfer rate of not higher than 1.5 M bit/sec, such as a compact disc (CD), digital audio tape recorder (DAT) or a hard disc. According to the draft standardization, the storage medium may be directly connected to a decoder or it may be connected thereto via a transmission medium such as a computer bus, local area network (LAN) or telecommunication link. It is contemplated by the draft standardization to implement special functions, such as random accessing, high-speed playback or reverse playback, in addition to the usual forward playback.

In the arrangement proposed by MPEG for high efficiency encoding of picture signals, redundancy along the time axis is lowered by encoding the difference between pictures, and subsequently redundancy along the spatial axes is lowered by employing discrete cosine transform (DCT) and variable length encoding.

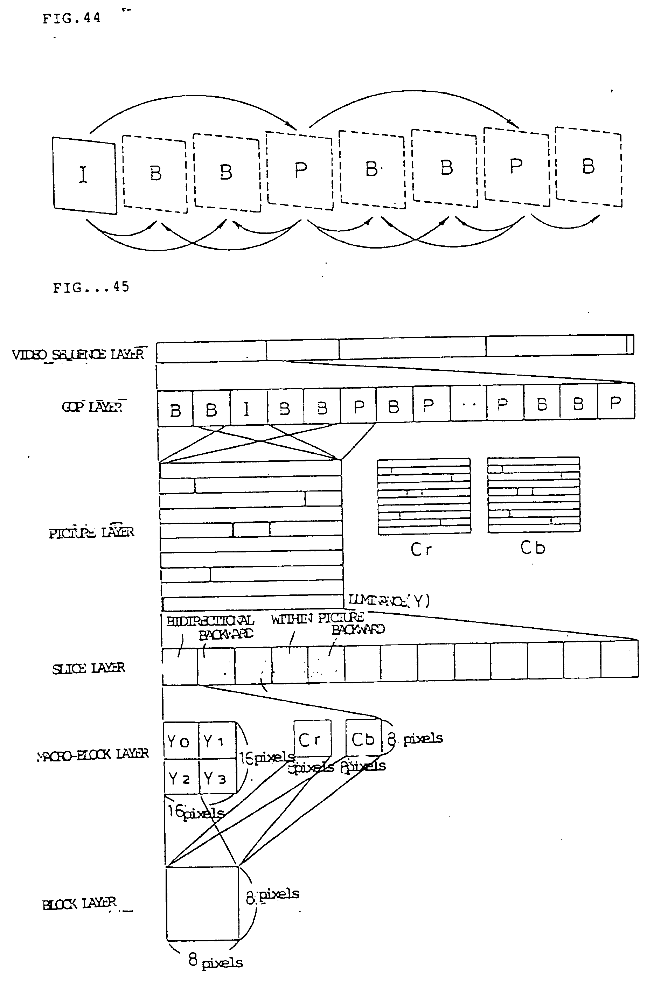

With respect to redundancy along the time axis, in moving pictures, a picture under consideration, that is a picture at a given point in time, generally bears a strong resemblance to temporally previous and temporally posterior pictures. Consequently, if the difference between the picture now to be encoded and the picture temporally preceding it is taken and transmitted, as shown in Figure 44, then it becomes possible to lower the redundancy along time axis to diminish the volume of information to be transmitted. A picture encoded in this manner is termed a forwardly predictive-coded picture, P picture or a P frame. Similarly, if the difference is taken between the picture now to be encoded on the one hand and the picture temporally preceding it and the picture temporally succeeding it or interpolated pictures produced from the preceding and succeeding pictures, and a smaller one of the resulting differences is transmitted, it becomes possible to lower further the redundancy along time axis to diminish the volume of information to be transmitted. The picture encoded in this manner is termed a bidirectionally predictive-coded picture, B picture or a B frame.

The pictures shown at I, P and B in Figure 44 represent an intra-coded picture, I picture or I frame, as later explained, as well as the above-mentioned P picture and B picture, respectively.

The respective predicted pictures (referred to as predictive-coded pictures) are produced by so-called movement compensation.

As an example of movement compensation, a block consisting of, for example, 16 * 16 pixels, which is formed of four unit blocks each of, for example, 8 * 8 pixels, is prepared. The 16 * 16 pixel block is termed a macro-block. The macro-block of the temporally previous picture in the vicinity of a given macro-block of a current picture exhibiting the least difference from the macro-block of the current picture is found by searching, and a difference therebetween is taken to enable a reduction of the data to be transmitted. For the P-picture, a picture produced by taking the difference between the picture now to be encoded and the predicted picture following movement compensation or a picture produced without taking the difference between the picture to be encoded and the predicted picture following movement compensation, whichever exhibits less data volume, is selected and encoded from one 16 * 16 pixel macro-block to another.

However, in the above case, more data needs to be transmitted for a picture portion which has just emerged from behind an object which has been moved. For a B-picture, decoded temporally previous or temporally posterior pictures following movement compensation, an interpolated picture produced by adding these pictures, or a picture to be encoded, whichever is the least in data volume, is encoded.

With respect to redundancy along spatial axes, the differences of the picture data are not directly transmitted, but are discrete cosine transformed from one 8 * 8 pixel block to another. The discrete cosine transform (DCT) expresses a picture not on the pixel level, but as a function of which of the frequency components of a cosine function are contained in a picture and the amounts of the frequency components contained in that picture. For example, data contained in a 8 * 8 pixel unit block are transformed by two-dimensional DCT into a block of 8 * 8 coefficients of the components of the cosine function. It is known that picture signals of a natural scene taken by a television camera tends to be smooth signals. In such case, the data volume may be efficiently diminished by discrete cosine transforming the picture signals.

Thus, in the case of smooth signals, such as picture signals of the natural scene, larger values are concentrated about a certain coefficient. If the coefficient is quantized, the 8 * 8 coefficient block becomes substantially equal to zero, while larger coefficients are left. For transmitting data of the 8 * 8 coefficient block, non-zero coefficients and a zero run indicating how many 0s are present in front of the coefficient are grouped into a set in the sequence of a so-called zig-zag scan, which set is transmitted as a Huffman code for diminishing the amount of information that needs to be transmitted. The image is re-constructed in the reverse sequence at the decoding side.

The data structure handled by the above-described encoding arrangement is shown in Figure 45 and is comprised of a block layer, a macro-block layer, a slice layer, a picture layer, a group of pictures (GOP) layer and a video sequence layer, looking from bottom to top in Figure 45. The various layers are explained beginning from the lowermost layer.

Referring to the block layer, each block of the block layer is made up of 8 * 8 luminance or colour difference pixels, that is 8 neighboring luminance pixels in 8 lines or 8 neighboring colour difference pixels in 8 lines. The above-mentioned DCT is performed for each of these 8 * 8 blocks.

In the macro-block layer, each macro-block of the layer is made up of four left, right, upper and lower neighboring luminance blocks Y0, Y1, Y2 and Y3, and colour difference blocks (unit colour difference blocks) Cr and Cb which are at the same position in the picture as luminance blocks. These blocks are transmitted in the sequence of Y0, Y1, Y2, Y3, Cr and Cb. Which of the blocks is used as a reference picture for taking differences or if no difference needs to be transmitted is determined by the encoding system from one macro-block to another.

The slice layer is made up of one or plural macro-blocks which are contiguous in the picture scanning sequence. At a head part of the slice, the motion vector and DC component in the picture are reset. The first macro-block has data indicating a position in the picture so that restoration is possible on error occurrence. Consequently, the length of a slice or the starting position of the slice is arbitrary and may be changed depending on the error states of transmission links.

In the picture layer, the pictures are each made up of at least one and preferably plural slices. Depending on the encoding system, the pictures are classified into the above-mentioned intra-encoded pictures, I-pictures or I-frames, the forwardly predictive-coded pictures, P-pictures or P-frames, bidirectionally predictive-coded pictures, B-pictures or B-frames, and DC intra-coded pictures, or DC coded (D) pictures.

In the intra-coded picture or I-picture, only the information contained with the particular picture is employed. In other words, the picture may be re-constituted on decoding only by the information of the I-picture. In effect, the picture is directly discrete cosine transformed and encoded without taking a difference between it and any other picture. Although the encoding system is generally low in efficiency, I-pictures may be inserted at arbitrary positions to enable random access and high-speed playback.

In the forwardly predictive-coded picture or P-picture, the I-picture or P-picture which is temporally previous and has already been decoded is employed as a reference picture for difference taking. Either the difference between the present picture and the movement-compensation reference picture or the present picture itself, without taking a difference (intra-coded picture), whichever is more efficient, is selected for encoding, and this selection is made from one macro-block to another.

In the bidirectionally predictive-coded picture or B-picture, three reference pictures, namely the temporally preceding already decoded I-picture or P-picture and interpolated pictures produced from both of these pictures, are employed as the reference pictures. Encoding of one of the three differences following the movement compensation or intra encoding, whichever is most efficient, is selected from one macro-block to another.

The DC intra-coded picture is the intra-coded encoded picture constituted only by the DC coefficients of DCT and cannot exist in the same sequence as the other three pictures (i.e. the I, P or B pictures).

The group-of-picture (GOP) layer is made up of one or plural I-pictures and zero or plural non-I pictures. If the input sequence into the encoder is 1I, 2B, 3B, 4P*5B, 6B, 7I, 8B, 9B, 10I, 11B, 12B, 13P, 14B, 15B, 16P*17B, 18B, 19I, 20B, 21B and 22P, the output sequence of the encoder, that is the input sequence to the decoder is 1I, 4P, 2B, 3B*7I, 5B, 6B, 10I, 8B, 9B, 13P, 11B, 12B, 16P, 14B, 15B*19I, 17B, 18B, 2P, 20B and 21B. The reason such change in the sequence is made in the encoder is that, for encoding or decoding the B-picture, it is necessary that the reference picture, that is the temporally posterior I-picture or P-picture, be present at the time the B-picture is to be encoded or decoded. The distance between the I-pictures or the distance between the I-picture and B-picture, is arbitrary. Besides, the distance between the I-pictures or the P-pictures may naturally be changed within the GOP layer. The boundary between the GOP layers is represented by *. The I-picture, P-picture and the B-picture are represented by I, P and B, respectively.

The video sequence layer is constituted by one or plural GOP layers having the same picture size, picture rate, etc.

When a normalized moving picture is to be transmitted by the high efficiency encoding arrangement of MPEG, a picture obtained by compressing data within the picture is transmitted, and then a difference from the same picture processed with movement compensation is transmitted.

When a field, for example, is processed as a picture, vertical positions become different between two fields, so that difference data needs to be transmitted for transmitting e.g. a still picture.

For processing a frame as a picture, a picture deformed in a comb shape needs to be processed as long as a moving portion in the frame is concerned. For example, in Figure 46, if a moving object CA, such as a car, is present ahead of a stationary background, since movement occurs between fields of a frame, the picture for the portion of the moving object becomes zig-zag shaped in contour as indicated at KS.

For processing a picture in which a stationary portion and a moving portion exist together, there is produced a picture portion in the picture which is low in compression efficiency, regardless of whether the field is processed as a picture or the frame is processed as a picture.

US-A-5091782 discloses a picture signal encoding device including orthogonal transformation of the picture. The picture is divided into blocks and orthogonal encoding is performed in parallel in both a field and a frame format, the output of one of the formats being selected in accordance with the errors detected in the data. The data comprises a control data bit for signalling whether field or frame formatting has been used. Motion compensation may be performed in some embodiments to achieve additional compression. It is performed in the same manner regardless of whether field or frame processing is chosen for encoding.

The invention addresses the problem of providing a high efficiency encoding technique for encoding picture signals whereby field or frame processing of a field-based video picture may be carried out efficiently regardless of whether the picture contains a subject that undergoes little motion or abundant motion.

Various aspects of the invention are set out in the accompanying claims.

Embodiments of the invention will now be described, by way of example only, with reference to the accompanying drawings in which:

Figure 1 is a block diagram showing a schematic arrangement of a high efficiency encoding apparatus;

Figure 2 shows an example of macro-block;

Figure 3 shows an example of macro-block for a frame processing mode;

Figure 4 shows an example of macro-block for a field processing mode;

Figure 5 is a block diagram showing an arrangement of a high efficiency encoding device for picture signals of a second embodiment;

Figure 6 shows the manner of encoding by encoding devices of the first and second embodiments;

Figure 7 shows a unit block for DCT of the frame processing mode/field processing mode for a typical format of a digital VTR;

Figure 8 shows the manner of motion prediction in Figure 7;

Figure 9 shows a modification of Figure 7;

Figure 10 shows the manner of motion prediction in the modification of Figure 9;

Figure 11 shows a unit block for DCT of the frame processing mode/field processing mode for another typical format of a digital VTR;

Figure 12 shows another modification of Figure 7;

Figure 13 shows a set of macro-blocks;

Figure 14 shows the manner of processing in accordance with the frame processing mode with Figure 13;

Figure 15 shows the manner of processing in accordance with the field processing mode with Figure 13;

Figure 16 shows a modification (for forward prediction) of extension bit addition in the encoding device of second embodiment;

Figure 17 is a block diagram showing an arrangement of a decoder which is a counterpart of the encoding devices of first and second embodiments;

Figure 18 shows a picture of an odd cycle;

Figure 19 shows a picture of an even cycle;

Figure 20 is a block diagram showing a schematic arrangement of a high efficiency encoding device for picture signals of a third embodiment;

Figure 21 is a block diagram showing a schematic arrangement of a high efficiency encoding device for picture signals of a fourth embodiment;

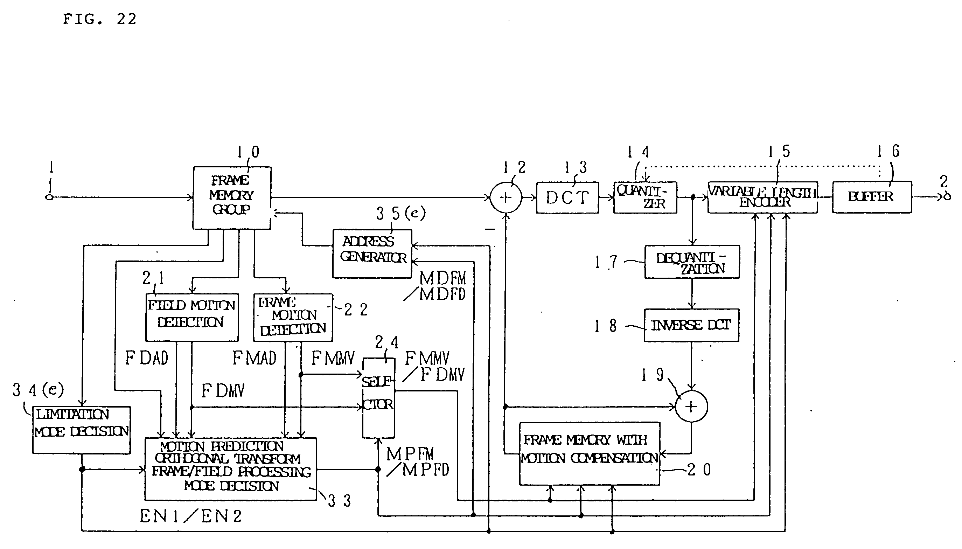

Figure 22 is a block diagram sowing a schematic arrangement of a modification of the high efficiency encoding device for picture signals of third embodiment;

Figure 23. is a flow chart for explaining a first modification of processing by limitation mode selecting means in the high efficiency encoding device for picture signals of the third embodiment;

Figure 24 shows motion vectors from an odd field to an even field;

Figure 25 is a flow chart for explaining a second modification of processing by limitation mode selecting means in the high efficiency encoding device for picture signals of third embodiment;

Figure 26 is a flow chart for explaining a third modification of processing by limitation mode selecting means in the high efficiency encoding device for picture signals of third embodiment;

Figure 27 is a flow chart for explaining a fourth modification of processing by limitation mode selecting means in the high efficiency encoding device for picture signals of third embodiment;

Figure 28 is a flow chart for explaining a fifth modification of processing by limitation mode selecting means in the high efficiency encoding device for picture signals of third embodiment;

Figure 29 shows motion prediction for the second limitation mode and frame processing mode;

Figure 30 shows motion prediction for the second limitation mode and field processing mode;

Figure 31 shows motion prediction for the first limitation mode;

Figure 32 is a block diagram showing a schematic arrangement of an encoding device (modification) of the second embodiment;

Figure 33 is a block diagram showing an arrangement of a third decoding device;

Figure 34 is a block diagram showing a schematic arrangement of a high efficiency encoding device for picture signals of a fifth embodiment;

Figure 35 shows the code decoding and display sequence by the fifth encoding device;

Figure 36 shows the code decoding and display sequence by the second (or third) encoding device;

Figure 37 shows the manner of motion prediction in the fifth encoding device;

Figure 38 is a block diagram showing an arrangement of the fifth decoding device;

Figure 39 shows the code decoding and display sequence by the fifth decoding device;

Figure 40 is a block diagram showing a schematic arrangement of a high efficiency encoding device for picture signals of a sixth embodiment;

Figure 41 shows the code decoding and display sequence by the sixth decoding device;

Figure 42 shows the manner of motion prediction in the sixth encoding device;

Figure 43 is a block diagram showing an arrangement of the sixth decoding device;

Figure 44 shows several prediction pictures;

Figure 45 shows a data structure; and

Figure 46 shows a picture having a moving object.

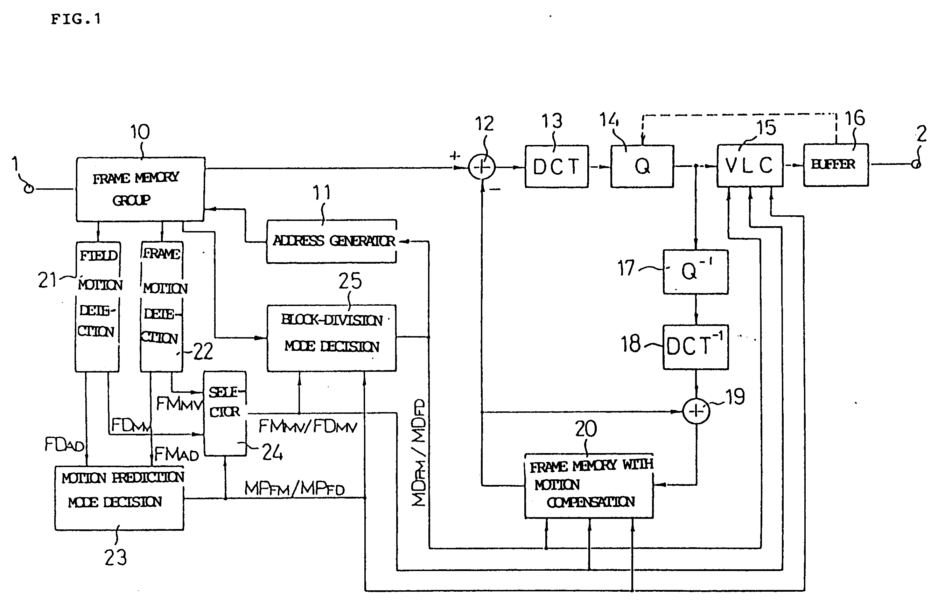

Figure 1 shows an embodiment 1 of the high efficiency encoding device for picture signals i which encoding is performed with a macro-block, which is a two-dimensional array of pixels smaller than a screen, consisting e.g. of 16 * 16 pixels of input picture data arrayed in a spatial sequence of input picture data, as a unit. The encoding device incudes a group of frame memories 10 for storing plural frames, each consisting of plural unit blocks of 16 * 16 pixels, as original pictures, and a frame movement detection circuit 22 and a field movement detection unit 21, as movement detection means, for detecting the sum of the differences of absolute values of the pixels and the movement vectors between the frames or between the fields. Each field is composed of odd-numbered or even-numbered scanning lines of the frame pixels and is divided on the basis of the above-mentioned macro-block as a unit. The encoding device also includes a movement prediction mode decision circuit 23 and a selector 24, as first mode selecting means, for deciding, based on the output information of the movement detection means, which of the frame predictive mode for movement compensation based on the frame in the macro-block as a unit or the field predictive mode for movement compensation based on the field in the macro-block as a unit and selecting the prediction mode with a higher efficiency. The encoding device also includes a block-forming mode decision circuit 25, as second mode selecting means, for deciding, based on the output information from the movement detection means and the first mode selecting means, which of the frame processing mode of forming blocks for effectuating orthogonal transform based on the frame in the macro-block as a unit or the field processing mode of forming blocks for effectuating orthogonal transform based on the field in the macro-block as a unit is more efficient for orthogonal transform and selecting the mode with a higher efficiency. The encoding device also includes an address generator 11, as a address generating means, for recognizing whether the cycle is an odd-numbered cycle of scanning the odd-numbered field or an even-numbered cycle of scanning the even-numbered field in the interlaced scanning of an encoding operation for a frame and for controlling the group of frame memories for outputting macro-blocks formed at the odd-numbered cycles for the selected block-forming mode. The encoding device also includes a group of frame memories 20 fitted with a movement compensator, as movement compensating means, for receiving the block-forming mode information as selected by the second mode selecting means and the movement prediction mode information as selected by the first mode means and executing prediction movement-compensated fields or frames.

The main stream of picture data to be encoded in Example 1 is explained with reference to the arrangement shown in Figure 1.

In Figure 1, digital picture signals are supplied to input terminal 1 so as to be stored in the group of frame memories 10. Data of the 16 * 16 unit macro-blocks are read from the group of frame memories 10, under control of address generator 11 as later explained, and transmitted to a difference detection unit 12. Movement-compensated picture data from the group of frame memories 20 are also supplied to the difference detection unit 12 where the differences in the picture data are detected.

An output of the difference detection unit 12 is supplied to a DCT circuit 13 for effectuating orthogonal transform (DCT). DCT coefficient data from the DCT circuit 13 are transmitted to a quantizer 14. Quantized data from quantizer 14 are transmitted to a variable length encoding circuit 15 for effectuating a variable length encoding, such as Huffman encoding or run-length encoding, and outputted at output terminal 2 via buffer 16 as encoded data.

The quantized data from the quantizer 14 are supplied to the frame memory group 20 fitted with the movement compensator via dequantizer 17 for effectuating dequantization which is the reverse of the quantization effectuated in the quantizer 14, an inverse DCT circuit 18 for effectuating an inverse DCT operation which is the reverse of the DCT operation performed by DCT circuit 13, and an additive node 19. The additive node 19 adds an output of the inverse DCT circuit 18 and an output of the frame memory group 20 fitted with the movement compensator. Meanwhile, signals for inhibiting overflow of the buffer 16 are fed back from buffer 16 to quantizer 14.

On the other hand, picture data outputted from frame memory group 10 from one macro-block to another are transmitted to a frame movement detection circuit 22 and a field movement detection circuit 21.

The frame movement detection circuit 22 detects and the motion vectors between frames and the sums of the absolute values of the differences between pixels from one macro-block to another and outputs these data, that is data of motion vectors between frames FMMV and the sums of the absolute values of the differences FMAD. The field movement detection circuit 21 detects the sums of the absolute values of the differences of the pixels from one macro-block to another to output these data, that is data of motion vectors between fields FDMV and the sums of the absolute values of the differences FDAD. The motion vector data FMMV/FDMV of these motion vector detection circuits 21, 22 are transmitted to selector 24, while the data of the sum of the absolute values of the differences FMAD/FDAD are transmitted to the movement prediction mode decision circuit 23.

The movement prediction mode decision circuit 23 decides, based on the data of the sums of the absolute values of the differences FMAD from frame movement detection circuit 22 and the data of the sums of the absolute values of the differences FDAD from field movement detection circuit 21, as to whether the movement prediction is to be made on the frame-by-frame basis or on the field-by-field basis at the time of the movement prediction at the frame memory group fitted with the movement compensator 20, and outputs data indicating a processing mode which is more advantageous or efficient. Specifically, if the difference between the sums of the absolute values of the differences FMAD and FDAD is found to be larger than a predetermined threshold T1 (FMAD - FDAD > T1) by the movement prediction mode decision unit 23, data indicating that the field-by-field movement prediction is more efficient (data MPFD for the field processing mode for movement prediction) is outputted from circuit 23. Conversely, if the difference between the sums of the absolute values of the differences FMAD and FDAD is found to be smaller than or equal to a predetermined threshold T1 (FMAD - FDAD ≤@T1), data indicating that the frame-by-frame movement prediction is more efficient (data MPFM for the frame processing mode for movement prediction) is outputted from circuit 23. The outputted movement prediction mode data MPFM/MPFD is transmitted to the frame memory group 20 fitted wit movement compensator which then effectuates frame-by-frame or field-by-field movement compensation. The movement prediction mode data MPFM/MPFD are also transmitted to selector 24.

The selector 24 selects, responsive to the motion prediction mode data MPFM/MPFD from motion prediction mode decision circuit 23, the frame-to-frame motion vector data FMMV supplied from frame motion detection circuit 22 or the field-to-field motion vector data FDMV supplied from field motion detection circuit 21. That is, if the motion prediction mode data is the data MPFD indicating the field prediction mode data MPFD, selector 24 selects and outputs the motion vector data FDMV from field motion detection circuit 21, whereas, if the motion prediction mode data is the data MPFM indicating the frame prediction mode data MPFM, selector 24 selects and outputs the motion vector data FMMV from frame motion detection circuit 22. The motion vector data FMMV/FDMV, as selected by selector 24, is transmitted to the block-forming mode decision circuit 25.

The block-forming mode decision circuit 25 is also supplied with output data from the field memory group 10 and the processing mode data MPFM/MPFD from motion prediction mode decision circuit 23. The block-forming mode decision circuit 25 receives the motion prediction mode data MPFM/MPFD and the motion vector data FMMV/FDMV and formulates a differential picture using pictures from the frame memory group 10. The circuit 25 also selects, based on the difference picture, the block-forming mode most suited to the picture processed by the DCT circuit 13. For the I-picture or I-frame, data of the picture of the frame memory group 10 (original picture) is employed in place of the above-mentioned differential picture.

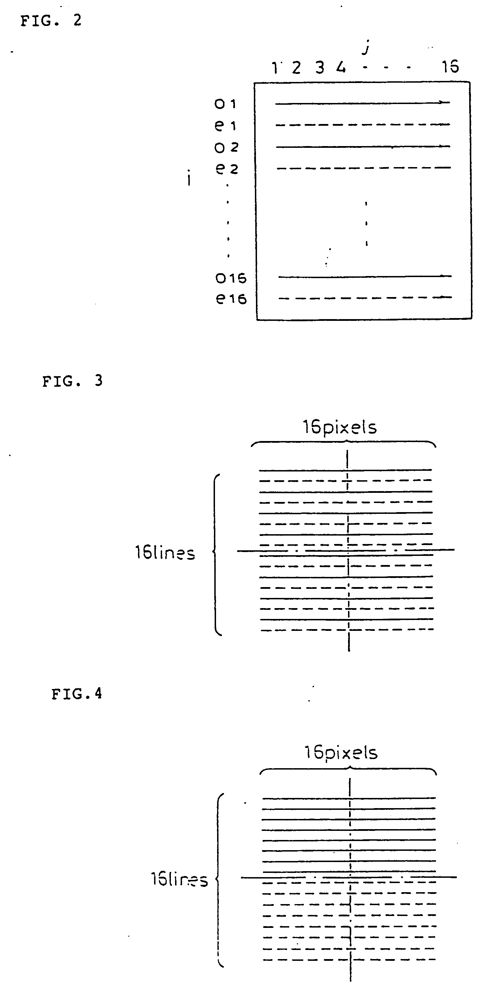

It is now assumed that e.g. the macro-block of the differential picture is a macro-block shown for example in Figure 2. In the case of the I-picture, the macro-block is the macro-block of the original picture. In Figure 2, odd-numbered lines o1, o2, o3 ..., oN, where N indicates 16 in the case of a macro-block, are indicated by solid lines, while even-numbered lines e1, e2, e3, ..., eN, where N indicates 16 in the case of a macro-block, are indicated by broken lines. The pixels of the even-numbered lines are indicated as e(i, j), while those of the odd-numbered lines are indicated as o(i, j). In the differential picture or original picture, that is the picture of the I-picture, as shown in Figure 2, the difference EFD of the field-by-field differential picture may be represented by the equation 1, whereas the difference EFM of the frame-by-frame differential picture may be represented by the equation 2.

$$EFD = \sum_{j=1}^{16} \sum_{i=1}^{15} (|o(i,j) - o(i+1,j)| + |e(i+j) - e(i+1,j)|) \qquad \text{equ 1}$$

$$EFM = \sum_{j=1}^{16}\sum_{i=1}^{16} |o(i,j) - e(i,j)| + \sum_{j=1}^{16}\sum_{i=1}^{15} |e(i,j) - o(i+1,j)| \qquad \text{equ 2}$$

If a difference between the frame-by-frame difference EFM and the field-by-field difference EFD, as found by the equations 1 and 2, respectively, is found to be larger than a certain threshold T2 (EFM - EFD > T2), the block-forming mode decision circuit 25 outputs data indicating that the DCT operation by the DCT circuit 13 be performed on the field-by-field basis, that is data MDFD for the field-by-field operation mode for the block-forming operation. Conversely, if it is found that the difference between the differences EFM and EFD is smaller than or equal to the threshold T2 (EFM - EFD ≤@T2), the block-forming mode decision circuit outputs data indicating that the DCT operation by the DCT circuit 13 be performed on the frame-by-frame basis, that is data MDFM for the frame-by-frame operation mode for the block-forming operation. The block-forming mode data MDFM/MDFD is transmitted to the address generator 11 and to the frame memory group fitted with movement compensator 20. Besides, the motion vector data (FMMV/FDMV), block-forming mode data (MDFM/MDFD) and the predictive mode data (MPFM/MPFD) are transmitted to the variable length encoding circuit 15.

The address generator 11 controls the frame memory group 10 to output the picture data stored therein in the form of macro-blocks in accordance with the DCT processing mode data MDFM/MDFD. That is, if the block-forming mode data is the data MDFM indicating the frame-by-frame DCT operation, address generator 11 controls the frame memory group to output macro-blocks in which even-numbered and odd-numbered fields are scanned alternately with one another. Thus the unit macro-block transmitted to DCT circuit 13 is constituted by the alternate even-numbered and odd-numbered fields. Conversely, if the block-forming mode data is the data MDFD indicating the field-by-field DCT operation, address generator 11 controls the frame memory group to output a macro-block in which the even-numbered field is separated from the odd-numbered field, as shown in Figure 4. Thus the unit macro-block, transmitted to DCT circuit 13, is constituted by the odd-numbered and the even-numbered fields separated from one another. However, the DCT circuit 13 performs DCT operation on the 8 * 8 pixel unit macro-block basis, as described previously. In Figs.3 and 4, the odd-numbered and even-numbered lines are indicated by solid and broken lines, respectively.

On the other hand, the predictive mode data MPFM/MPFD from the movement predictive mode decision circuit 23, the processing mode data MDFM/MDFD from DCT mode decision circuit 25 and the motion vector data FMMV/FDMV, as selected by selector 24, are also transmitted to the frame memory group fitted with motion compensator 20. Thus the frame memory group fitted with motion compensator 20 is not only responsive to predictive mode data MPFM/MPFD for movement prediction and to the block-forming mode data MDFM/MDFD for DCT, but also effectuates movement compensation.

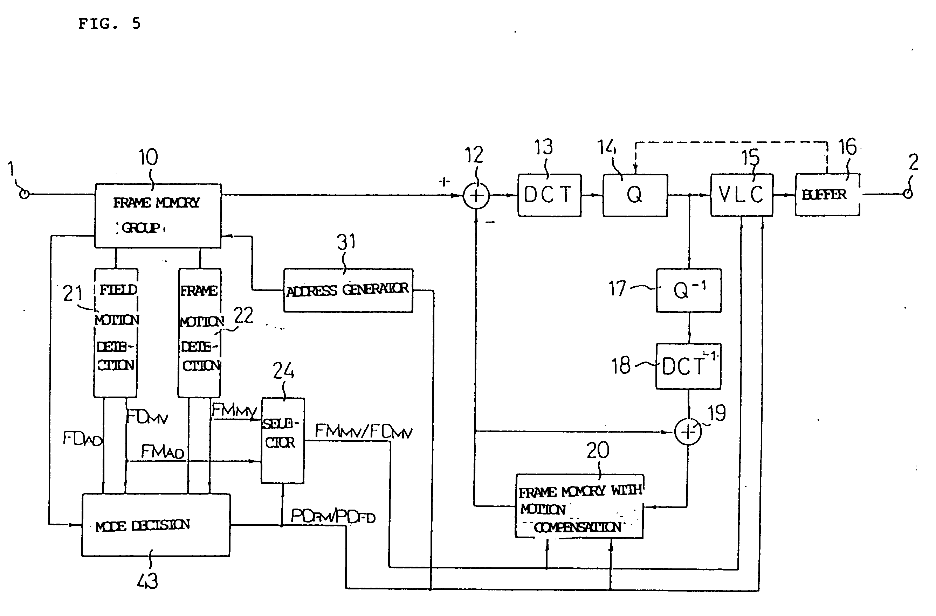

Figure 5 shows an embodiment 2 of the second high-efficiency encoding device of the present invention. In Figure 5, the blocks denoted by the same numerals as those in Figure 1 are operated in the same manner as those shown in Figure 1. Consequently, only the blocks bearing different numerals are explained.

That is, the high efficiency encoding device shown in Figure 5 includes, besides the blocks bearing the same numerals as those of the high efficiency encoding device shown in Figure 1, a mode decision circuit 43 and a selector 24, as processing mode selecting means, for deciding, based on the output information from the movement detection means, which of the movement compensation being of the frame-by-frame predictive mode and the block forming for orthogonal transform being of the field-by-field operating mode or the movement compensation being of the field-by-field predictive mode and the block forming for orthogonal transform being of the frame-by-frame operating mode is more efficient and selecting the more efficient modes, and an address generator 31, as address generating means, for controlling the frame memory group to recognize if the cycle in the interlaced scanning of each frame for encoding is an odd-numbered cycle or an even-numbered cycle and to sequentially output odd-numbered fields for one macro-block in an amount corresponding to one frame at each odd-numbered cycle only if the mode of the mode decision circuit 43 is for field prediction and field processing, and subsequently to output the even-numbered fields for one macro-block at each even-numbered cycle in an amount corresponding to one frame.

Meanwhile, the embodiment 2 is directed to an encoding device for not separating the block-forming mode from the motion compensating mode. Although the same block diagram as that of the embodiment 1 suffices, the embodiment 2 differs fundamentally from the embodiment 1 in the above-described operation of the address generator.

Meanwhile, the mode decision circuit 43 shown in Figure 5 (Embodiment 2) decides, based on data of the sums of the absolute values of the differences FMAD from the frame movement detection circuit 22 and data of the sums of the absolute values of the differences FDAD from the field motion detection circuit 21, whether the movement prediction is to be performed on the frame-by-frame basis or on the field-by-field basis at the time of the movement prediction at the frame memory group fitted with movement compensator 20 as later explained, and formulates a differential picture, using the results of decision (prediction mode data MPFM/MPFD of embodiment 1), motion vector FMMV/FDMV from the motion detection circuits 21, 22 and the picture from the frame memory group 10, for deciding, based on the differential picture, the mode for block-forming most suitable to the picture processed with DCT by the DCT circuit 13. That is, the mode decision circuit 43 decides which of the motion prediction being of the frame prediction mode and the block-forming mode being of the frame processing mode PDFM or the motion prediction being of the field prediction mode and the block-forming mode being of the field processing mode PDFD is more efficient. In other words, the mode decision circuit 43 has the combined functions of the prediction mode decision circuit 23 and the block-forming mode decision circuit 25.

Meanwhile, the mode decision may be achieved in the same way as the decision of the motion prediction mode and the block-forming mode in the Embodiment 1.

On the other hand, address generator 31 controls the frame memory group 10 to output the picture data stored therein in the form of macro-blocks in accordance with the aforementioned mode data PDFM/PDFD. That is, if the block-forming mode data is the data PDFM indicating the frame-by-frame encoding operation, address generator 11 controls the frame memory group 10 to output macro-blocks in which scanning of even-numbered and odd-numbered lines is alternated with one another. Thus the unit macro-block transmitted to DCT circuit 13 is constituted by the alternate even-numbered and odd-numbered fields. Conversely, if the block-forming mode data is the data PDFD indicating the field-by-field encoding operation, address generator 31 controls the frame memory group to output odd-numbered fields for the macro-block sequentially for one frame at the odd-numbered cycles and subsequently output even-numbered fields for the macro-block sequentially for one frame at the even-numbered cycles. Thus the unit macro-block, transmitted to DCT circuit 13 at the odd-numbered cycles, is constituted solely by the odd-numbered fields during the odd-numbered cycles and solely by the even-numbered fields during the even-numbered cycles. However, the DCT circuit 13 effectuates DCT on the basis of the 8 * 8 pixel unit macro-blocks, as described previously.

That is, since it is possible with the above-described high efficiency encoding device for information signals, according to the above-described embodiments 1 and 2, to make a changeover between the frame prediction mode and the field prediction mode in the movement prediction and between the frame processing mode and the field processing mode in the block-forming for DCT, on the macro-block basis, the encoding may be achieved most efficiently on the macro-block basis.

Specifically, the motion prediction and DCT as described hereinbelow is effectuated by the encoding device of the embodiments 1 or 2 depending on the formats of e.g. the so-called digital VTR.

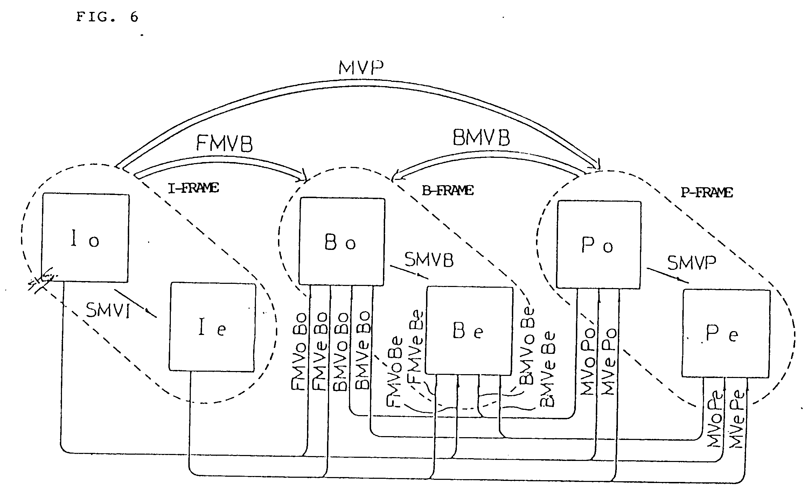

In Figs.6, 8 and 10, the fields making up a frame of the I-frame or I-picture are indicated as Io field (an odd-numbered field of the I-frame) and Ie field (even-numbered field of the I-frame), the fields making up the P-frame or P-picture are indicated as Po field (an odd-numbered field of the P-frame) and Pe field (even-numbered field of the P-frame), and the fields making up the B-frame or B-picture are indicated as Bo field (an odd-numbered field of the B-frame) and Be field (even-numbered field of the B-frame).

Meanwhile, the frame processing mode for block formation according to the embodiments 1 and 2 is that in which the odd-numbered fields and the even-numbered fields are combined to form the macro-block which is used as a processing unit. That is, the frame processing mode is that of forming a macro-block for each frame. On the other hand, the field processing mode for block formation is that in which the odd-numbered fields and the even-numbered fields each form macro-blocks which are used as processing units. That is, the field processing mode is that of forming a macro-block for each field. Consequently, with the I-frame, for example, the frame processing mode is changed over from the frame processing mode to the field processing mode or vice versa for each macro-block.

Besides, with the high efficiency encoding device according to the embodiments 1 and 2, each frame is divided, as long as the encoding operation is concerned, into odd-numbered cycles and even-numbered cycles, corresponding to the periods of scanning of odd-numbered cycles and even-numbered cycles of the interlaced scanning, respectively.

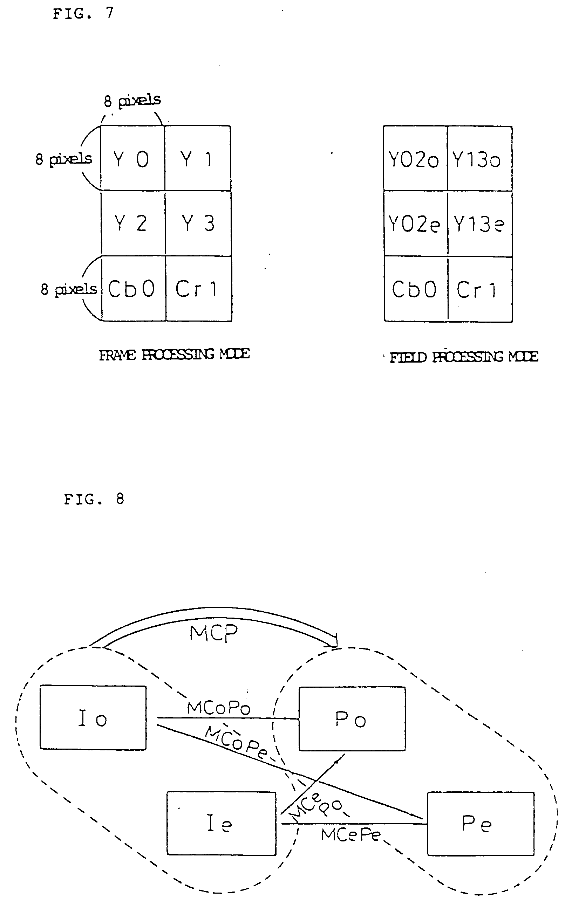

Meanwhile, when handling the so-called 4:2:0 component digital VTR format with the embodiment 1, each macro-block is made up of luminance blocks Y0, Y1, Y2 and Y3, each composed of odd-numbered fields and even-numbered fields, and colour difference blocks Cb0 and Cr1, each composed of odd-numbered fields, if the block forming mode is the frame processing mode, and DCT is performed based on the above-mentioned unit blocks of the macro-block, as shown in Figure 7. Conversely, if the block forming mode is the field processing mode, each macro-block MB is made up of luminance blocks Y02o, Y13o composed of the odd-numbered fields, luminance blocks Y02e, Y13e each composed of the even-numbered fields and colour difference blocks Cb0, Cr1 each composed of odd-numbered fields, and DCT is performed based on the above-mentioned unit blocks of the macro-block.

As for the motion prediction for the embodiment of Figure 7, motion prediction MCP between the I-frame and the P-frame is possible for the frame predictive mode, as shown in Figure 8. On the other hand, motion prediction MCoPo between the Io field and the Po field, motion prediction MCoPe between the Io field and the Pe field and motion prediction MCePe between the Ie field and the Pe field become possible for the field prediction mode. That is, in Figure 8, motion prediction and block formation may be present independently for the frame prediction/processing mode and for the field prediction/processing mode, such that a motion vector may be found for the frame prediction mode and two motion vectors may be found for the field prediction mode.

Consequently, if, in the above-described embodiment 1, the block-forming mode of the I-frame is the frame processing mode, the Io fields and the Ie fields are combined for the odd-numbered cycles to form the macro-block. During the odd-numbered cycles, DCT, quantization and variable length encoding are performed from one macro-block to another. Conversely, no data is transmitted during the even-numbered cycles for the present mode. Meanwhile, DCT is performed for the above-mentioned 8 * 8 unit blocks.

If the block-forming mode is the field processing mode, the macro-block is constituted by an Io field and an Ie field, separated from each other, for the odd-numbered cycle, and DCT, quantization and variable length encoding are performed from one macro-block to another. Conversely, no data is transmitted during the even-numbered cycles, as shown in Figure 7. Meanwhile, DCT is performed for the above-mentioned 8 * 8 unit blocks.

For the P-frame, the following operation is performed. If, for example, the block formation mode of the P-frame is the frame processing mode and the motion prediction mode is the frame prediction mode, the frame-to-frame motion vector MVP is detected during the odd-numbered cycles, using the forward picture (I-frame picture) as the reference picture. The macro-block, composed of alternate Io and Ie fields, is used as a prediction picture, and the difference thereof from the original picture is encoded. Conversely, no data is transmitted during the even-numbered cycles for the present mode.

If the block-forming mode for the P frame is the frame processing mode, with the motion prediction being of the field prediction mode, the motion vector MVoPo between the Io field and the Po field, the motion vector MVePo between the Ie field and the Po field, the motion vector MVoPe between the Io field and the Pe field and the motion vector MVePe between the Ie field and the Pe field are detected, using the Io field and the Pe field (or the Po field and the Pe field) as the reference pictures, for the odd-numbered cycles. The one of the prediction for the odd-numbered cycles, the prediction for the even-numbered cycles and both predictions, such as a mean value of the prediction for the odd-numbered field and the od-numbered field, which will give the least value of the predicted error from the current frame P, is selected, and the difference from the original picture is found, using the above-mentioned macro-block, combined from the Io and Ie fields, as the reference picture. Conversely, no data is transmitted for the even-numbered cycles of the current mode.

If the block-forming mode for the P-frame is the field processing mode, with the motion prediction being of the frame prediction mode, the frame-to-frame motion vector MVP is detected for the odd-numbered cycles, using the I-frame picture or the P-frame picture as a reference picture, and the difference from the original picture (which is a macro-block constituted by Po an Pe fields) is encoded, using the above-mentioned macro-block, constituted by the Io and Ie fields separated from one another, as a prediction picture. Conversely, no data is transmitted for the even-numbered cycles of the current mode, in the same manner as above.

If the block-forming mode for the P frame is the field processing mode, with the motion prediction being of the field prediction mode, the motion vector MVoPo between the Io field and the Po field, the motion vector MVePo between the Ie field and the Po field, the motion vector MVoPe between the Io field and the Pe field and the motion vector MVePe between the Ie field and the Pe field are detected, using the Io field and the Ie field (or the Po field and the Pe field) as the reference pictures, for the odd-numbered cycles. The one of the prediction for the odd-numbered cycles, the prediction for the even-numbered cycles and both predictions, such as a mean value of the prediction for the odd-numbered field and that for the odd-numbered field, which will give the least value of the predicted error from the current frame P, is selected, and the difference from the original picture, which is the macro-block combined from the Po and Pe fields, separated from each other, is encoded, using the macro-block, combined from the Io and Ie fields, separated from each other, as the reference picture. Conversely, no data is transmitted for the even-numbered cycles of the current mode.

If the current frame is the B-frame, the following operation is performed.

If the block-forming mode for the B-frame is the frame processing mode, with the motion prediction being of the frame prediction mode, the frame-to-frame motion vectors, that is a motion vector FMVB between the I-frame and the B-frame and a motion vector BMVB between the P-frame and the B-frame, are detected, for the odd-numbered cycle, using the temporally forward and backward pictures as the reference pictures, that one of the forward prediction, backward prediction and bidirectional prediction, which is a mean value between the two predictions, which will give the last value of the estimated error from the current frame, is selected, and the difference from the original picture is encoded, using the macro-block, composed of alternate odd-numbered and even-numbered fields, as the prediction picture. Conversely, no data is transmitted for the even-numbered cycles of the current mode, in the same manner as above.

If the block-forming mode for the B frame is the frame processing mode, with the motion prediction being of the field prediction mode, the temporally forward and backward pictures are used for the odd-numbered cycles as the reference pictures, and prediction is made of the respective odd-numbered fields and the even-numbered fields. The respective motion vectors, namely a motion vector FMVoBo between the Io field and the Bo field, a motion vector FMVeBo between the Ie field and the Bo field, a motion vector FMVoBe between the Io field and the Be field, a motion vector FMVeBe between the Ie field and the Be field, a motion vector BMVoBo between the Po field and the Bo field, a motion vector BMVeBo between the Pe field and the Bo field, a motion vector BMVoBe between the Po field and the Be field and a motion vector BMVeBe between the Pe field and the Be field are detected. The one of the prediction for the odd-numbered field, the prediction for the even-numbered field, and both predictions, for example, a mean value of the two predictions, by the respective vectors, which will give the least value of the predicted error from the current frame, is selected, and the difference from the original picture is encoded, using the macro-block, composed of the Io and Ie fields or Po and Pe fields, as the prediction picture. Conversely, no data is transmitted for the even-numbered cycles of the current mode.

If the block-forming mode for the B frame is the field processing mode, with the motion prediction being of the frame prediction mode, frame-to-frame motion vectors, namely a motion vector FMVB between the I-frame and the B-frame and a motion vector BMVB between the P-frame and the B-frame, are detected, for the odd-numbered cycles, using the temporally forward and backward pictures as reference pictures. The one of the forward prediction, backward prediction and bidirectional prediction, which is a mean value between the two predictions, which will give the least value of the predicted error from the current frame, is selected, and the difference from the original picture is encoded, using the above-mentioned macro-block, composed of odd-numbered and even-numbered fields, separated from one another, as a prediction picture. Conversely, no data is transmitted for the even-numbered cycles of the current mode.

If the block-forming mode for the B frame is the frame processing mode, with the motion prediction being of the field prediction mode, the temporally forward and backward pictures are used for the odd-numbered cycles as the reference pictures, and prediction is made of the respective odd-numbered fields and the even-numbered fields. The respective motion vectors, namely a motion vector FMVoBo between the Io field and the Bo field, a motion vector FMVeBo between the Ie field and the Bo field, a motion vector FMVoBe between the Io field and the Be field, a motion vector FMVeBe between the Ie field and the Be field, a motion vector BMVoBo between the Po field and the Bo field, a motion vector BMVeBo between the Pe field and the Bo field, a motion vector BMVoBe between the Po field and the Be field and a motion vector BMVeBe between the Pe field and the Be field are detected. The one of the prediction for the odd-numbered field, the prediction for the even-numbered field, and both predictions, for example, a mean value of the two predictions, by the respective vectors, which will give the least value of the predicted error from the current frame, is selected, and the difference from the original picture is encoded, using the macro-block, composed of the Io and Ie fields or Po and Pe fields, as the prediction picture. Conversely, no data is transmitted for the even-numbered cycles of the current mode.

However, with the embodiment 1, motion prediction between Io and Ie fields, motion prediction between Po and Pe fields or motion prediction between Io and Ie fields or motion prediction between Bo and Be fields cannot be achieved, as may be seen from Figure 8.

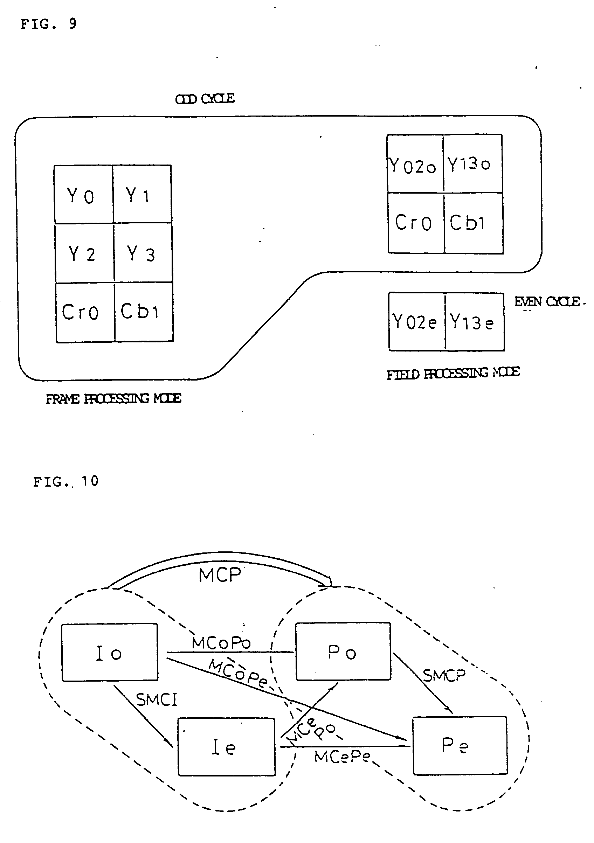

In such case, prediction from an odd-numbered field to an even-numbered field may be made in each picture by employing the embodiment 2. If the block-forming is of the frame processing mode, each of unit blocks of a macro-block MB, namely luminance blocks Y0, Y1, Y2 and Y3, each composed of odd-numbered and even-numbered fields, and colour difference blocks Cb0, Cr1, each composed of odd-numbered fields, is processed with DCT for the odd-numbered blocks, as shown for example in Figure 9. If the block forming mode is the field processing mode, each of the unit blocks, that is the luminance blocks Y02o, Y13o of the odd-numbered field and the colour difference blocks Cb0, Cr1 of the odd-numbered field, is processed with DCT for the odd-numbered cycles. Subsequently, the luminance blocks Y02e and Y13e of the odd-numbered fields are processed with DCT during the even-numbered cycles.

With the present example, shown in Figure 9, motion prediction SMCI between the Io and Ie fields and motion prediction SMCP between the Po and Pe fields may be made in addition to the motion predictions MVP, MCoPo, MCoPe, MCePo and MCePe shown in Figure 9.

Thus, in the embodiment 2, if the block forming mode for the I-frame is the frame processing mode, the Io and Ie fields are combined for the odd-numbered cycles to form the macro-block and, for the odd-numbered cycles, for example, DCT, quantization and variable length encoding are performed from one macro-block to another. It is noted that DCT is performed on the above-mentioned 8 * 8 unit block basis. Conversely, no data is transmitted during the even-numbered cycles for the current mode. If the block-forming mode is the field processing mode, only odd-numbered fields of the macro-block are encoded in a similar manner for the odd-numbered cycles. In this manner, at a time point of completion of the odd-numbered cycle, the Io field in its entirety and a macro-block fraction of the Ie field by the frame processing mode are obtained at the decoder as later explained. For the even-numbered cycle of the I-frame, motion prediction is performed of the macro-block of the Ie field by the field processing mode, using the Io field as a reference picture, and the motion vector SMVI as well as the difference from the prediction picture is encoded.

If the current frame is the P-frame, the following operation is performed. If, for example, the block-forming mode for the P-frame is the frame processing mode and motion prediction is of the frame prediction mode, the frame-to-frame motion vector MVP is detected, using the forwardpicture (I-frame picture) as a reference picture, for the odd-numbered cycles, and a difference from the original picture is encoded, using the macro-block composed of Io and Ie fields as a prediction picture. No data is transmitted for the even-numbered cycles for the current mode, in the same manner as above.

If the block-forming mode is of the field processing mode, with the motion prediction being of the field prediction mode, a motion vector MVoPo between the Io field and the Po field and a motion vector MVePo between the Ie field and the Po field are detected, for the odd-numbered cycles, using the Io and Ie fields or the Po and Pe fields as reference pictures. The one of the prediction for the odd-numbered fields, prediction for the even-numbered fields and both predictions, for example, a mean value of the prediction for the even-numbered fields and that for the odd-numbered fields, is selected, and the difference thereof from the prediction picture is encoded. For the even-numbered cycles of the current mode, the motion vector MVoPe between the Io and Pe fields, the motion vector MVePe between the Ie and Pe fields and the motion vector SMVP between the Po and Pe fields are detected for the macro-block of the field processing mode. The one of the prediction for the odd-numbered fields, the prediction for the even-numbered fields and the prediction for the odd-numbered fields of the current frame (motion prediction from Po field concerned only with the even-numbered cycles) by the respective vectors and the prediction which is a mean value between two of the above-mentioned predictions, which will give the least value of the predicted error, is selected, and the difference thereof from the prediction picture is encoded.

If the block-forming mode for the B-frame is the frame processing mode, and motion prediction mode is the frame prediction mode, frame-to-frame motion vectors, that is a motion vector FMVB between the I-frame and the B-frame and a motion vector BMVB between the P-frame and the B-frame, are detected for the odd-numbered cycles, using forward and backward pictures as reference pictures. The one of the forward prediction, backward prediction and bidirectional prediction, that is a mean value between forward and backward predictions, which will give the least value of the predicted error from the current frame, is selected, and the difference of the selected prediction from the current picture is encoded. Conversely, no data is transmitted for the even-numbered cycles for the current mode.

If the block-forming mode is the field processing mode, with the motion prediction being of the field prediction mode, prediction of odd-numbered and even-numbered fields of the forward and backward pictures as the reference pictures is performed for the odd-numbered cycles, and respective motion vectors, namely, a motion vector FMVoBo between the Io and Bo fields, a motion vector FMVeBo between the Ie nd Bo fields, a motion vector BMVoBo between the Po and Bo fields and a motion vector BMVeBo between the Pe and Bo fields are detected. The prediction which will give the least value of the predicted error is selected in the same manner as before and the difference of the selected prediction and the predicted picture is encoded. For the even-numbered cycles of the current mode, predictions by the motion vector FMVoBe between the Io and Be fields, motion vector FMVeBe between the Ie and Be fields, motion vector BMVoBe between the Po and Be fields and the motion vector BMVeBe between the Pe and Be fields and prediction of the odd-numbered fields of the current frame, that is the prediction by the motion vector SMVB between the Bo and Be fields, are additionally performed, and such a prediction which will give the least prediction error is selected. A difference is then taken of the selected prediction from the predicted picture.

When handling the so-called 4:2:2 component digital VTR format with the above-described embodiment 1, the unit blocks of the macro-block, that is the luminance blocks Y0, Y1, Y2 and Y3, each composed of odd-numbered and even-numbered fields, and the colour difference blocks Cb01, Cr01, Cb23 and Cr23, each composed of odd-numbered and even-numbered blocks, are processed with DCT.

For the field processing mode, the luminance blocks Y02o and Y13o of the odd-numbered fields, colour difference blocks Cb0123o and Cr0123o of the odd-numbered fields, the luminance blocks Y02e and Y13e of the even-numbered fields and colour difference blocks Cb0123e and Cr0123e of the even-numbered fields, are processed with DCT.

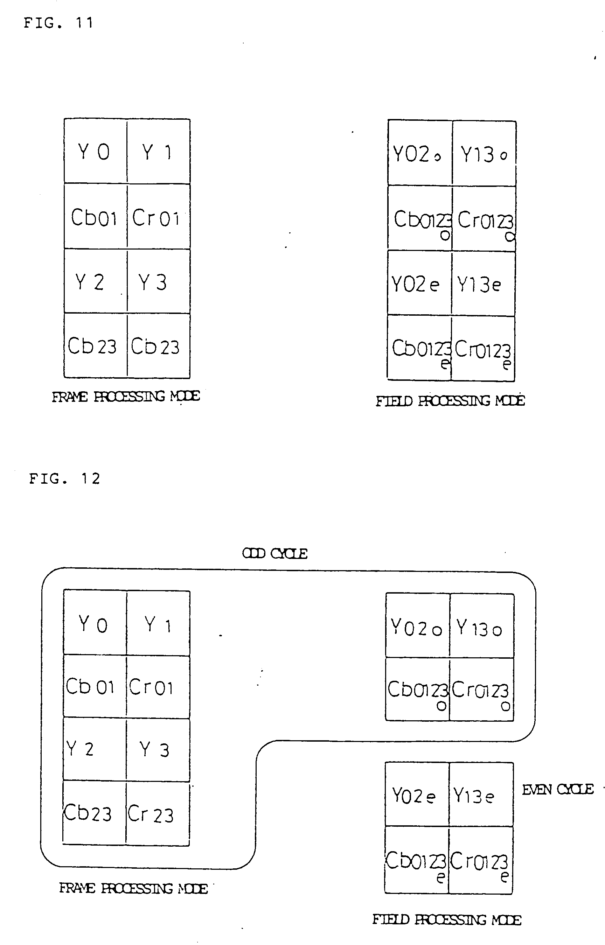

Motion prediction for the example of Figure 11 is performed in a manner as shown in Figure 8. However, with the present example, shown in Figure 11, motion prediction between Io and Ie fields, motion prediction between Po and Pe fields or motion prediction between Bo and Be fields cannot be achieved, in the same manner as above.

In such case, the embodiment 2 may be employed, as explained previously. If the block-forming is of the frame processing mode, the unit blocks of a macro-block, namely the luminance blocks Y0, Y1, Y2 and Y3 and colour difference blocks Cb01, Cr01, Cb23 and Cr23, each composed of odd-numbered and even-numbered fields, are processed with DCT for the odd-numbered blocks, as shown for example in Figure 12. If the block forming mode is the field processing mode, respective unit blocks, that is the luminance blocks Y02o, Y13o composed of the od-numbered fields and the colour difference blocks Cb0123o and Cr0123o composed of the odd-numbered fields are processed with DCT for the odd-numbered cycles. Subsequently, the luminance blocks Y02e and Y13e of the even-numbered fields and the colour difference blocks Cb0123e and Cr0123e composed of the even-numbered fields are processed with DCT for the even-number cycles.

Motion prediction for the example of Figure 12 is the same as that shown in Figure 12.

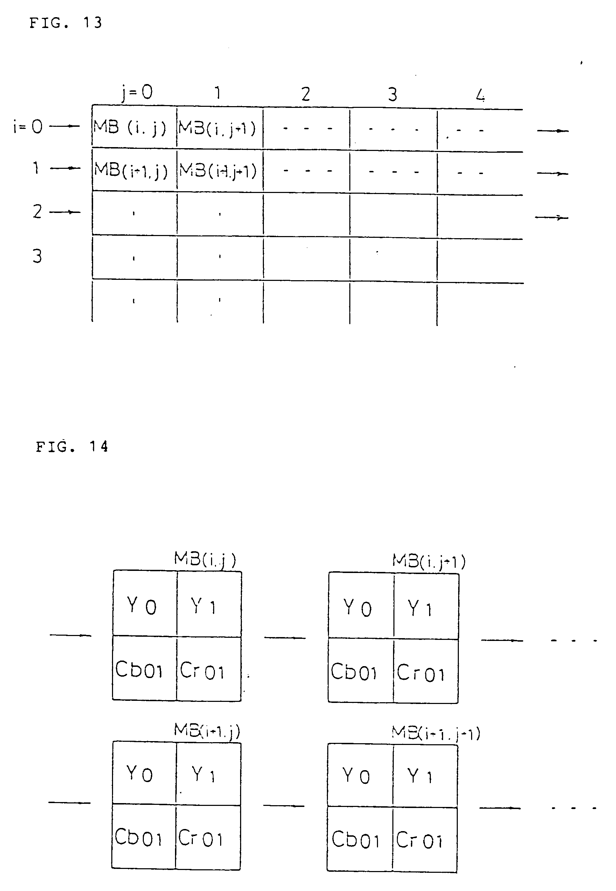

For handling the above-mentioned 4:2:2 component digital VTR format by the above-described embodiments 1 and 2, an arrangement may be so made that, besides the operation shown in Figs.11 and 12, frame movement prediction is performed on the basis of the macro-block MB, as shown in Figure 13, whereas, for field motion prediction, a certain macro-block MB(i, j) and another macro-block MB(i+1, j) therebelow are grouped as a macro-block set MBg and motion prediction for the odd-numbered fields and the motion prediction for the even-numbered fields are performed of the macro-block set MBg.

Figure 14 shows several macro-blocks of the frame shown partially in Figure 13. It is assumed that the operation proceeds in a direction shown by arrow in Figure 14. That is, Figure 14 shows a macro-block MB(i, j+1) next to the macro-block MB(i, j), and macro-blocks. MB(i+1, j) and MB(i+1, j+1) therebelow, that is, belonging to the next line.

In the macro-block shown in Figure 14, the luminance blocks Y0, Y1 and the colour difference blocks Cb01, Cr01 are processed with DCT, with e.g. the frame processing mode, for each of the macro-blocks MB(i, j), MB(i, j+1), ..., MB(i+1, j) and MB(i+1, j+1). Consequently, with the frame processing mode, processing of each macro-block is not affected by the processing of other macro-blocks.

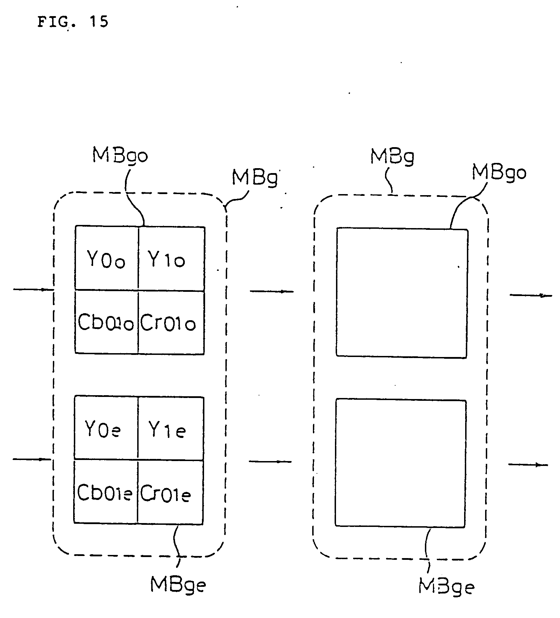

Conversely, with the field processing mode, as shown in Figure 15, the macro-blocks making up the macro-block set MBg are divided into macro-blocks MBgo of odd-numbered fields and macro-blocks MBge of even-numbered fields and luminance blocks Y0o, Y1o and colour difference blocks Cb01o, Cr01o within the odd-field macro-block MBgo are processed with DCT. If the macro-block set MBg is made up of the macro-blocks MB(i, j) and MB(i+1, j) of Figure 14, the luminance blocks Y0o, Y1o within the odd-field macro-block MBgo in the macro-block MBg are made up of odd-field luminance blocks of the macro-block MB(i, j) and odd-field luminance blocks of the macro-block MB(i+1, j) and the colour difference blocks Cb01o, CrO1o within the odd-field macro-block MBgo are made up of odd-field colour difference blocks of the macro-block MB(i, j) and odd-field colour difference blocks of the macro-block MB(i+1, j). Similarly, the luminance blocks Y0o, Y1o within the even-field macro-block MBge in the macro-block MBg are made up of even-field luminance blocks of the macro-block MB(i, j) and even-field luminance blocks of the macro-block MB(i+1, j) and the colour difference blocks Cb01e, Cr01e within the even-field macro-block MBge are made up of even-field colour difference blocks of the macro-block MB(i, j) and even-field colour difference blocks of the macro-block MB(i+1, j).

As may be seen from above, the relation between motion prediction and DCT processing modes is as follows: In the present encoding device, if, in the macro-block MB(i, j), the motion prediction is of the frame processing mode and the DCT is of the frame processing mode, the difference between the predicted picture and an input picture (original picture), extracted from a picture decoded in the frame memory group fitted with motion compensator 20 as a reference frame, is processed with DCT. The DCT coefficients and frame motion vectors are transmitted.

If, in the macro-block MB(i, j), the motion prediction is of the field processing mode and the DCT is of the field processing mode, the difference between the predicted picture extracted from the odd-numbered field and the odd-field original picture and the odd-field motion vector are encoded for the macro-block MB(i, j), while the difference between the predicted picture extracted from the even-numbered field and the even-field original picture and the even-field motion vector are encoded for the macro-block MB(i+1, j).

If, in the macro-block MB(i, j), the motion prediction is of the field processing mode and the DCT is of the frame processing mode, a frame difference between a predicted picture for the position of the macro-block MB(i, j) taken out from the reference frame and the input picture, the odd-field motion vector and the even-field motion vector are transmitted for the macro-block MB(i, j). A frame difference between a predicted picture for the position of the macro-block MB(i+1, j) taken out from the reference frame and the input picture is transmitted for the macro-block MB(i+1, j).

If, in the macro-block MB(i, j), the motion prediction is of the frame processing mode and the DCT is of the field processing mode, a difference between a predicted picture taken out from the odd-numbered field and the odd-field original picture, the frame motion vector of the macro-block MB(i, j) and the frame motion vector of the macro-block MB(i+1, j) are transmitted for the macro-block MB(i, j), while the difference between the odd-numbered predicted picture and the input picture is transmitted for the macro-block MB(i+1, j).

Meanwhile, with the encoding device of the present embodiment, the present code is realized by adding extension bits to the conventional macro-block type for interchangeability with the conventional system.

That is, in the embodiment 1, the macro-block type has three predictions, namely forward prediction, backward prediction and bidirectional prediction. Since prediction from odd-numbered and even-numbered fields of the previous frame are possible with the forward prediction, the present code is realized by appending extension bits useful for recognizing which of these predictions is used. Since there are two predictions, it suffices to add one bit for one direction, that is for the forward or backward direction. For example, if the prediction is forward or backward prediction and from the odd-numbered fields, it suffices to add a code 1 as an extension bit to the conventional macro-block type. Similarly, if the prediction is from the even-numbered field, it suffices to add a code 0 as an extension bit to the conventional macro-block type. For bidirectional prediction, both extension bits are appended for both forward and backward predictions.

Meanwhile, for a frame prediction mode, no extension bits are appended, so that the bit string is of the same style as the conventional bit stream (MPEG).

The above applies to the P-frame as well.

In the embodiment 2, the macro-block type has three predictions, namely forward prediction, backward prediction and bidirectional prediction for e.g.the B-frame. If the prediction is the forward prediction with the field prediction mode, it is necessary to append extension bits to the macro-block for allowing to recognize if, when the prediction is for the field prediction mode, the prediction is that from an odd-numbered field, an even-numbered field or from an odd-numbered field of the current frame. That is, since there is a prediction from the current frame in the forward field prediction mode, one or two extension bits are required for expressing three predictions including odd- and even-numbered predictions by extension bits. On the other hand, for backward field prediction mode, since there are two predictions, that is prediction for odd and even numbers, 1 extension bit is required. For example, for forward prediction, a code 1 for odd-odd-numbered field of a forward frame and, a code 01 for even-numbered field of a forward frame and a code 11 for prediction from odd-numbered field of a rear frame are appended. For backward prediction, it suffices to append codes 1 and 0 for prediction from an odd-numbered field of a backward frame and for prediction from an even-numbered field of a backward frame to the conventional macro-bit type.

If the mode is the frame prediction mode, no extension bits are appended, so that the bit string is of the same style as the conventional bit stream (MPEG). For bidirectional prediction, both extension bits are appended for forward or backward prediction.

The above applies to the P-frame as well.

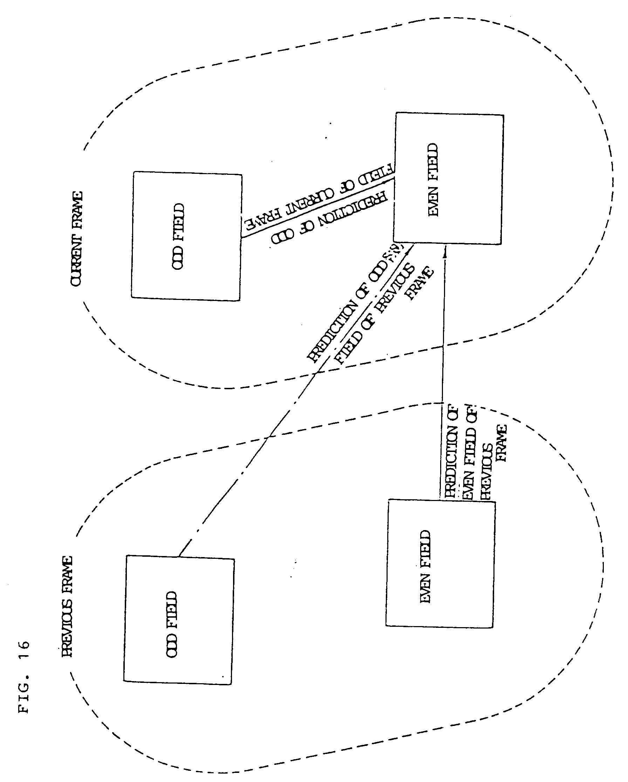

As a modification, the number of the extension bits can be reduced to one for forward prediction. That is, in the even-numbered cycle for the field prediction mode, the number of bits may be reduced to two and the forward prediction mode may be transmitted by one extension bit by abolishing prediction from the odd-numbered field furthest removed both temporally and spatially, as shown in Figure 16. Specifically, for odd-numbered cycles and for forward prediction, it suffices to add codes 1 and 0 to the conventional macro-block type as extension bits in the case of prediction from an odd-numbered field of the forward frame and an even-numbered field of the forward frame. Similarly, for even-numbered cycles and for forward prediction, it suffices to add codes 1 and 0 to the conventional macro-block type as extension bits in the case of prediction from an odd-numbered field of the current frame and an even-numbered field of the forward frame. Finally, for backward prediction, it suffices to add codes 1 and 0 to the conventional macro-block type as extension bits in the case of prediction from an odd-numbered field of the backward frame and an even-numbered field of the backward frame.

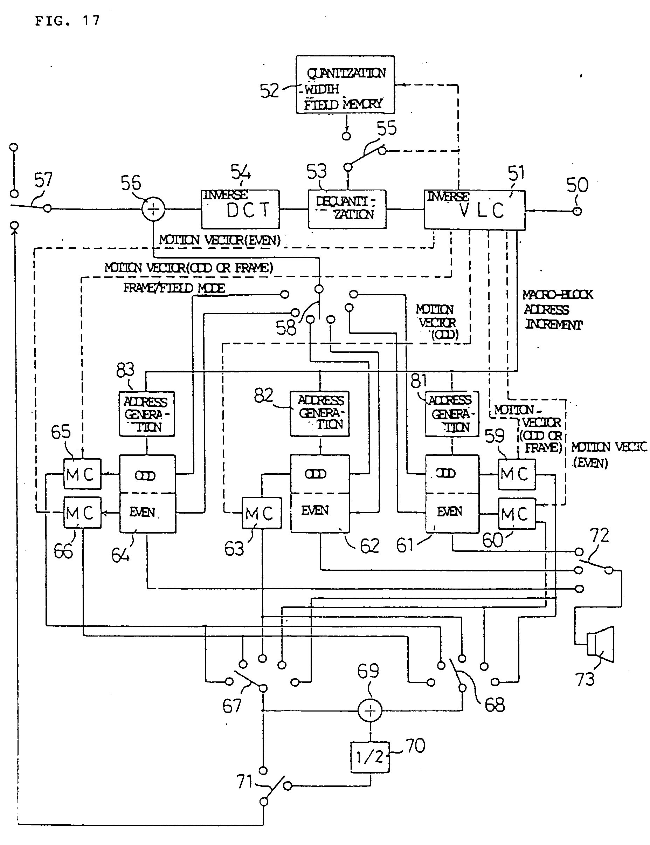

The block diagram of Figure 17 shows a decoder (first and second decoding units) for picture signals as a counterpart device of the encoding device of the above described embodiments 1 and 2. The high efficiency decoder includes a variable length encoding circuit 51 for receiving and decoding coded data of a picture to be reproduced and the header information for outputting the detected motion vector information, the motion prediction mode information indicating which of the frame-by-frame motion compensation and the field-by-field motion compensation in a macro-block is more efficient, the block-forming mode information indicating which of the block formation for frame-by-frame orthogonal transform and block formation for frame-by-frame orthogonal transform in a macro-block is more efficient, and a macro-block address increment in the macro-block header information. The high efficiency decoder also includes address generators 81, 82 and 83 by calculating address increment values at frame buffers 61, 62 and 64 storing picture decoding data from the macro-address increment for finding leading addresses of the macro-blocks and supplying the leading addresses to the frame buffers 61, 62 and 64, and motion compensation circuits 59, 60, 63, 65 and 66 for supplying the relative addresses of the macro-blocks other than the leading addresses to the frame buffers 61, 62 and 64 for data accessing, receiving the detected motion vectors, motion prediction mode information and the block-forming mode information, executing the compensation between motion-compensated frames or fields in association with the mode information and transmitting the motion-compensated picture information to the frame buffers 61, 62 and 64.

Referring to Figure 17, data encoded by the high efficiency encoding device of the embodiments 1 and 2 are transiently recorded on a storage medium, such as CD. The encoded data reproduced form CD is supplied via input terminal 50 to an inverse variable length encoding circuit 51 where the header information etc. are decoded from one sequence to another, from one frame group to another and from one frame to another. The header information is decoded from one slice (macro-block group) to another. The quantization width is included in the slice header. The macro-block type indicating the macro-block addresses, frame processing mode/field processing mode and the decoding system is decoded from one macro-block to another. The quantization width is decoded at the time of the updating.

Meanwhile, if the block formation in a macro-block is of the frame processing mode, the macro-block in its entirety is decoded for the odd-numbered cycle, while no data is decoded for an even-numbered cycle. If the block formation in a macro-block is of the field processing mode, only the block including odd-numbered fields in the macro-block is decoded for the odd-numbered cycle, wile the block including even-numbered fields is decoded for the even-numbered cycles.

The picture information is decoded by a dequantizer 53 performing an operation which is the reverse of quantization and an inverse DCT circuit 54 performing an inverse DCT operation, and a decision is given by the macro-block type as to whether or not the information is a differential information. Depending on the results of decision, a mode switch 57 for changeover between addition or non-addition to the reference picture (or between non-intra/intra of MPEG coding) by an additive node 56. The decoded picture is entered to frame buffers 64 or 61 for the I-or P-frame (alternately each time the I-frame or the P-frame s processed) and to frame buffer 62 if the current frame is the B-frame. Each frame buffer is composed of two field buffers and the odd/even field picture is stored separately in each of these field buffers. Recording in the frame buffers is controlled by changing over a switch 58.

The addresses recorded in the frame buffer are supplied from an address generator. The address generator calculates an address increment value in the frame buffer from the macro-block address increment in the header information of the macro-block to find the leading address of each macro-block.

The quantization width data is stored in a one-field memory 52. The quantization width data is supplied to dequantizer 53 via switch 55 changed over depending on the output of the inverse variable length encoding circuit 51. Since only the macro-block processed with the field processing mode is decoded for the even-numbered cycles, macro-block addresses decoded for each macro-block, macro-block type and the motion vector required by the prediction system indicated thereby are decoded and the differential picture from the reference field is added to the motion-compensated picture to produce the playback picture.

In the case of an encoding system in which the even-field quantization width data are transmitted independently of the odd-numbered field for the even-numbered cycle, it is unnecessary to store the quantization width data transmitted for the odd-numbered cycle, so that the one-field memory 52 may be eliminated.

On the other hand, data of the frame buffers 64, 62 and 61 is motion-compensated by the motion compensation circuits 65, 66, 59, 60 and 63. At this time, the respective motion compensation circuits change over the frame motion compensation/field motion compensation (frame/field) depending on the block-forming mode at the time of the DCT operation.

These motion-compensated pictures are transmitted to respective fixed terminals of changeover switches 67, 68 and 71. These changeover switches 67, 68, 71 are changed over for taking out the reference field or frame indicated by a decoding system of the macro-block decoding type. The changeover switch 71 is supplied with an output of switch 67 and a signal which is outputs of the changeover switches 67 and 68 added together by additive node 69 and subsequently halved by a divider 70. An output of switch 71 is supplied to switch 57.

Outputs of frame buffers 64, 61 ad 62 are supplied via changeover switch 72 to a display 73. The display 71 is supplied with the outputs of the changeover switch 72 which are changed over in the sequence of playback pictures instead of in the decoding sequence for producing an output picture.

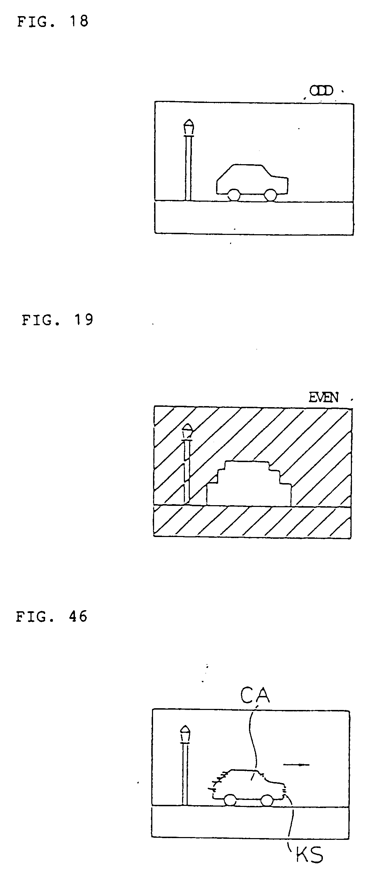

It will be seen from above that, if there is a moving object CA ahead of the stationary background, as shown in Figure 46, the moving object is seen as being zig-zag shaped, as shown at KS, if one frame is viewed, because there is a movement between fields. With the device of the present embodiment, since the moving object is encoded with the field processing mode, it can be processed as a picture devoid of deviations so that a high-quality moving picture may be reproduced by odd/even motion compensation. Thus, as shown for example in Figure 18, the moving portion is processed with the field processing mode during odd-numbered cycles, whereas the stationary portion is processed with the frame processing mode, as shown for example in Figure 18. Meanwhile, if a picture is already formed during the even-numbered cycle, the stationary portion is as shown by hatched lines in Figure 19. In Figure 19, the portion other than the hatched porion, that is the moving portion, is decoded by motion compensation.

Meanwhile, with the resent embodiment, since only the macro-block processed with the field processing mode is decoded during the even cycle, it is necessary to know a macro-block address. There are two methods for grasping the macro-block address. One is to transmit the address of the macro-block for each macro-block of the even cycle as described previously. The other method is to store the information of the one-field processing mode/frame processing mode information during the odd-numbered cycle and to calculate the address of the macro-block in the field processing mode from the string of each processing mode.

The former method has an advantage that it is necessary to add memories, whereas the latter method has an advantage that the transmitted information is not increased in volume. The same may be said of the quantization width if the quantization width is transmitted for each macro-block without storing one-field data during the above-mentioned odd-numbered cycle.

With the above-described embodiments 1 and 2, since one-frame processing is divided into two cycles, namely an odd cycle and an even cycle, the frame processing mode is changed over to the field processing mode or vice versa on the macro-block basis during the od-numbered cycle, both the odd-numbered field and the even-numbered cycle are decoded during frame processing, only odd fields are decoded for field processing, the quantization width for the cycle is stored, and the stored information is used during the next even cycle for motion-compensating only the macro-block of the field processing mode for decoding the playback picture, encoded data may be transmitted highly efficiently. That is, the high-quality moving picture may be reproduced with a smaller volume of the transmitted information.

By way of embodiments 3 to 6, a high efficiency encoding device for picture signals according to the present invention and third to sixth decoding devices associated therewith will be explained in detail.

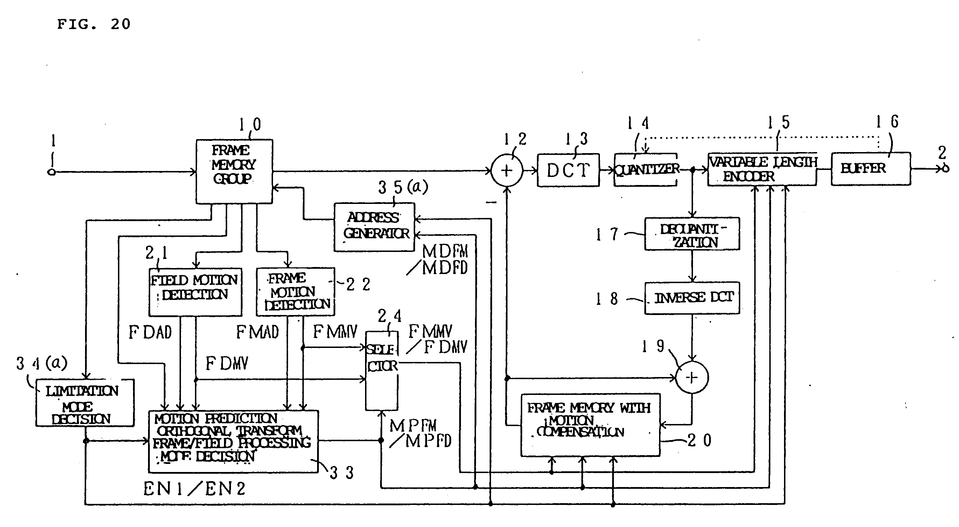

The block diagram of Figure 20 shows a high efficiency encoding device according to the embodiment 3. In this figure, the blocks indicated by the same numerals as those used in Figs.1 and 5 are operated in a similar manner. Therefore, only the blocks bearing different numerals from those used in Figs.1 and 5 are explained. The high efficiency encoding device of Figure 20 includes, besides the blocks bearing the same numerals as those shown in Figs.1 and 5, an encoding mode decision circuit 34(a) and a selector 24, as limitation mode selecting means, for selecting a first limitation mode of inhibiting encoding by the above-mentioned frame processing mode for all of the macro-blocks in each frame or a second limitation mode of inhibiting prediction of an even field of a current frame being encoded from an odd field of the same frame for the entire macro-blocks in one frame, whichever is more efficient, and an address generator 35(a) for controlling a frame memory group to output odd-numbered field components of the entire macro-blocks if the first limitation mode is elected for one frame or picture and subsequently to output even-numbered field components of the entire macro-blocks, as well as to sequentially output the macro-blocks, on the frame-by-frame basis, if the second limitation mode is selected, based on a frame constituted by odd-numbered and even-numbered field components of the macro-blocks as a unit.

That is, the high efficiency encoding device of the embodiment 3 includes, for encoding a moving picture having a frame made up of two frames, encoding means for dividing each of the blocks of the frame into an odd field (first field) and an even field (second field) and rendering the motion prediction of the first to second fields possible (first limitation mode) and for changing over between first and second field division/first and second field non-division on the macro-block basis by way of block formation (second limitation mode). These encoding means are changed over from frame to frame. A 1-bit information indicating these encoding means, that is the information indicating the selected mode, is appended to the codes.

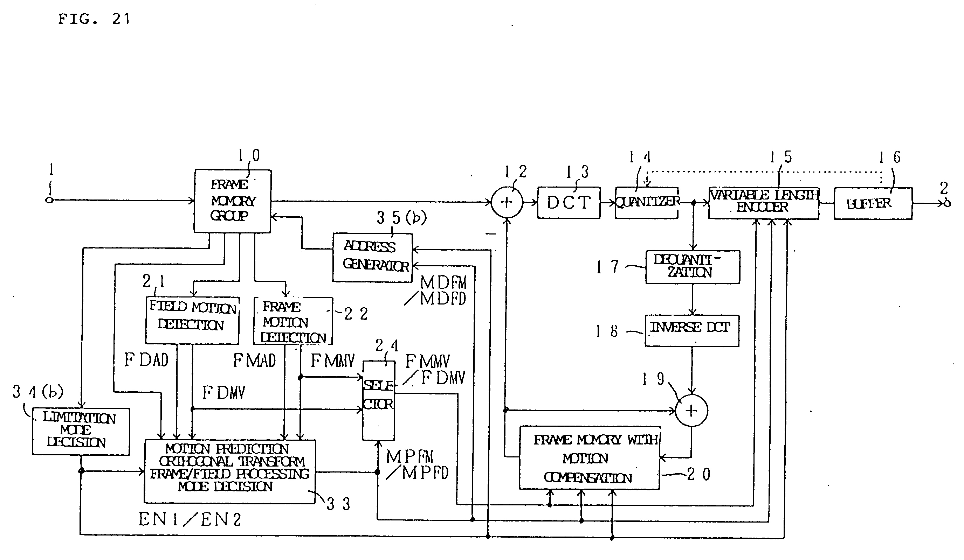

The block diagram of Figure 21 shows a high efficiency encoding device according to the embodiment 4. In this figure, the blocks indicated by the same numerals as those used in Figs.1 and 5 are operated in a similar manner. Therefore, only the blocks bearing different numerals from those used in Figs.1 and 5 are explained. The high efficiency encoding device of Figure 20 includes, besides the blocks bearing the same numerals as those shown in Figs.1 and 5, an encoding mode decision circuit 34(b) and a selector 24, as limitation mode selecting means, for selecting a first limitation mode of inhibiting encoding by the above-mentioned frame processing mode for all of the macro-blocks in each slice or a second limitation mode of inhibiting prediction an even field of a frame being encoded from an odd field of the same frame for the entire macro-blocks in one slice, whichever is more efficient, and an address generator 35(b) for controlling a frame memory group to output odd-numbered field components of the entire macro-blocks if the first limitation mode is selected for one frame or picture and to output even-numbered field components for the entire macro-blocks, as well as to sequentially output, if the second limitation mode is selected, the macro-blocks, by one slice at a time, based on a frame constituted by odd-numbered and even-numbered field components of all of the macro-blocks as a unit.

That is, the high efficiency encoding device of the embodiment 4 includes, for encoding a moving picture having a frame made up of two frames, encoding means for dividing each of the blocks in the frame into an odd field (first field) and an even field (second field) for rendering the motion prediction of the first to second fields possible (first limitation mode) for changing over between first and second field division/first and second field non-division on the macro-block basis by way of block formation (second limitation mode). These encoding means are changed over from frame to frame. A 1-bit information indicating these encoding means, that is the information indicating the selected mode, is appended to the codes.

Referring to the drawings, the embodiments 3 and 4 are explained in detail.

Figure 20 shows a third high efficiency encoding device for picture signals according to the embodiment 3 of the present invention. With the present encoding device, encoding is performed on the basis of macro-blocks each consisting in a two-dimensional array of plural pixels smaller in size than a picture. For example, each macro-block consists of 16 * 16 pixels in a spatial array of input picture data in a raster scanning sequence.

The high efficiency encoding device of the embodiment 3 includes a frame memory group 10 for storing, as an original picture, a frame (picture) consisting of plural unit blocks (macro-blocks) each consisting of 16 * 16 pixels, and motion detection means made up of a frame motion detection circuit 22 as means for detecting the sum of absolute values of the pixels and motion vectors between the frames on the macro-block basis, and a field motion detection circuit 21 for detecting on the macro-block basis, the sum of absolute values of the pixels and motion vectors between the fields, made up of even-numbered and odd-numbered scanning lines of the frame pixels.

The device of the present embodiment also includes a frame/field mode decision circuit 33 made up of first mode selecting means and second mode selecting means. The first mode selecting means decides which of a frame prediction mode of carrying out motion compensation based on a frame in the macro-block or a field prediction mode of carrying out motion compensation based on a field in the macro-block is more efficient and selects the more efficient mode. The second mode selecting means decides which of a frame processing mode of forming blocks for carrying out orthogonal transform, such as DCT, based on frame in the macro-block, of a field processing mode of forming blocks for carrying out orthogonal transform, such as DCT, based on of a field in the macro-block is more efficient for carrying out orthogonal transform, using the output information of the motion detection means and the first mode selecting means.

Besides, the present embodiment 3 includes, in addition to the motion detection means and the frame/field mode decision circuit 33, a limitation mode decision circuit 34(a), as limitation mode selecting means, for deciding which of the second limitation mode of adaptively changing over the mode of block formation for orthogonal transform between the frame processing mode and the field processing mode on the basis of each macro-block in each frame for encoding each macro-block in accordance with the selected mode or the first limitation mode of forming the blocks for orthogonal transform of the entire macro-blocks in each frame in accordance with the field processing mode, encoding odd fields in the macro-blocks in an amount corresponding to one frame during odd-numbered cycles and encoding even fields in the macro-blocks in an amount corresponding to one frame during even-numbered cycles is more efficient for encoding and selecting the more efficient limitation mode. The odd-numbered and even-numbered cycles mean the periods of scanning of odd-numbered and even-numbered fields in interlaced scanning, respectively.

Meanwhile, the decision circuit 34(b) of the fourth encoding device shown in Figure 21 includes limitation mode selecting means for deciding which of the second limitation mode of adaptively changing over the mode of block formation for orthogonal transform between the frame processing mode and the field processing mode on the basis of each macro-block in each frame for encoding each macro-block in accordance with the selected mode or the first limitation mode of forming the blocks for orthogonal transform of the entire macro-blocks in each slice in accordance with the field processing mode, encoding odd fields in the macro-blocks in an amount corresponding to one frame during odd-numbered cycles and encoding even fields in the macro-blocks in an amount corresponding to one frame during even-numbered cycles is more efficient for encoding and selecting the more efficient limitation mode. The odd-numbered and even-numbered cycles mean the periods of scanning of odd-numbered and even-numbered fields in interlaced scanning, respectively.

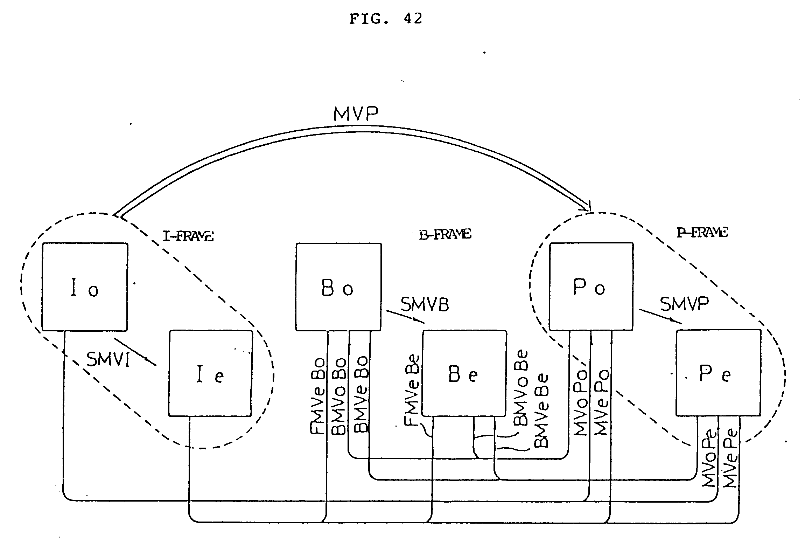

Figure 42 shows a modification of limitation mode selecting means of the embodiment 3. With the third encoding device, data FDAD and FMAD, as found from macro-block to macro-block, are cumulated from frame to frame to find cumulated data SFDAD and SFMAD. When the cumulative data SFDAD becomes smaller than FMAD + T, T being an offset value, the second limitation mode is selected, and otherwise, the first limitation mode is selected.

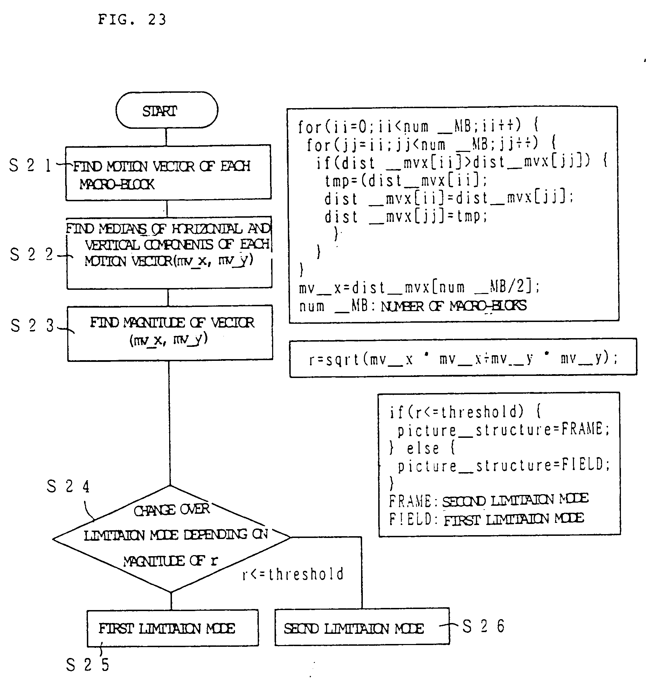

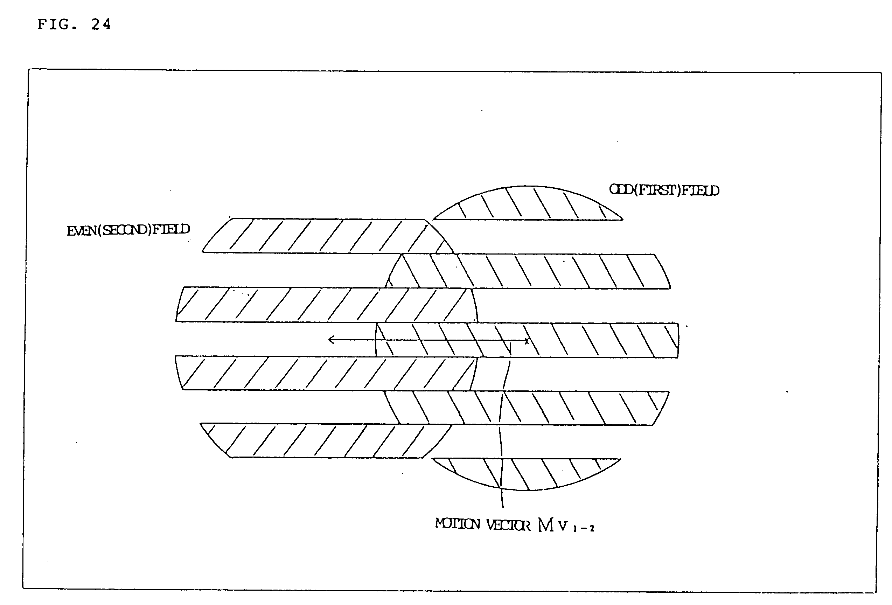

Besides, with the third encoding device, data FDAD and FMAD, as found from macro-block to macro-block, are cumulated from slice to slice to find cumulated data SFDAD and SFMAD. When the cumulative data SFDAD becomes smaller than FMAD + T, T being an offset value, the second limitation mode is selected, and otherwise, the first limitation mode is selected. Similarly, a flow chart of Figure 23 shows a modification of mode decision in the limitation means selecting means of the embodiment 3. With the third encoding device, the limitation mode selection is made using a motion vector from the odd field (first field) to the even field (second field) of the current frame being encoded. In Figure 24, the motion vector MV from this odd field to the even field, shown in Figure 24 by motion vector Mv1-2.

In the flow chart of Figure 23, the motion vectors are found at step S21 for all of macro-blocks in the current frame. At step S22, a median value between a horizontal component (x) and a vertical component (y) of each motion vector is found in the following manner. First, the horizontal components of the motion vectors are arrayed in the order of falling power. The value of the mid data becomes the median value Mv_x. The median Mv_y of the vertical components is found in a similar manner.

The vectors MV (Mv_x, Mv_y), thus found, represent parameters showing the motion of the picture in its entirety. The magnitude r of the vector MV is introduced as a parameter indicating the magnitude of the motion of the entire picture. The magnitude r may be found by the equation 3.

$$r = \mid MV \mid = \sqrt{(Mv\_x)^2 + (Mv\_y)^2} \qquad \text{equation 3}$$

At step S24, the limitation mode is changed over depending on the magnitude r. Since the first and second limitation modes are more meritorious for pictures having faster and slower movements, respectively, the second and first limitation modes are selected if r is not more than a certain threshold and otherwise, respectively.

That is, the second limitation mode and the first limitation mode are selected if r < threshold and r > threshold, respectively.

Meanwhile, with the fourth encoding device, the limitation mode selection is made using a motion vector from the odd field (first field) to the even field (second field) of the current frame being encoded. The motion vectors Mv are found from the even fields to the odd fields for all of the macro-blocks in he slice being encoded, and median values MV (Mv_x, Mv_y) of the horizontal and vertical components thereof are found. Similarly, the above magnitude r is found, and the second limitation mode is selected if the value r is not more than a certain threshold value. If otherwise, the first limitation mode is selected.

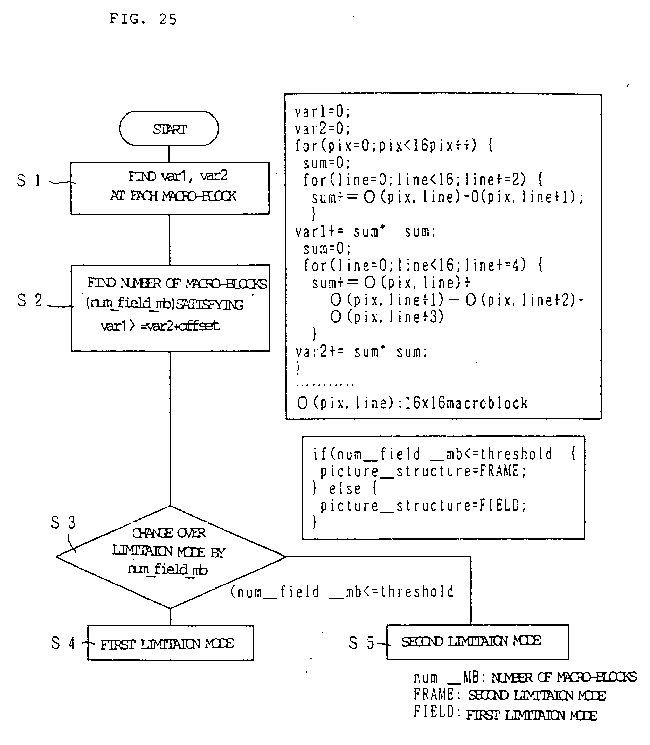

The flow chart of Figure 25 is a modification of mode selection by the limitation mode selecting means of the embodiment 3. The limitation mode is selected using the correlation between the odd and even fields of the current frame being encoded.

The correlation between the odd and even fields is achieved by the method shown in Figure 25. This is the method well-known as a method for selecting the macro-block mode in the international standardization of the moving picture encoding and compression now under way at ISO/IEC JTC1/SC2/WG11. With the present embodiment, this method is extended and used for selecting the frame selecting mode.

In the flow chart shown in Figure 25, var 1 and var 2 are first found at step S1. Then, at step S2, the number of macro-blocks in the current frame satisfying the relation var 1 >= var 2 + offset is found. This number is termed num_field_mb.

For the macro-block satisfying the relation var 1 >= var 2 + offset, which has higher correlation between fields, the first limitation mode is preferably employed. Therefore, the second limitation mode is selected at step S3 if num_field_mb is not more than a certain threshold, and the first limitation mode is elected otherwise, for further processing.

That is, if num_field_mb <= threshold, the limitation mode is the second limitation mode of step S5 and, if num_field_mb > threshold, the limitation mode is the first limitation mode of step S4.

Meanwhile, with the fourth encoding device, the number of macro-blocks num_field_mb satisfying the relation var 1 >= var 2 + offset in the slice being encoded is found in a similar manner and the limitation mode is selected depending on this value. If num_field_mb is not more than a certain threshold, the second limitation mode is selected and, if otherwise, the first limitation mode is selected, for further processing.

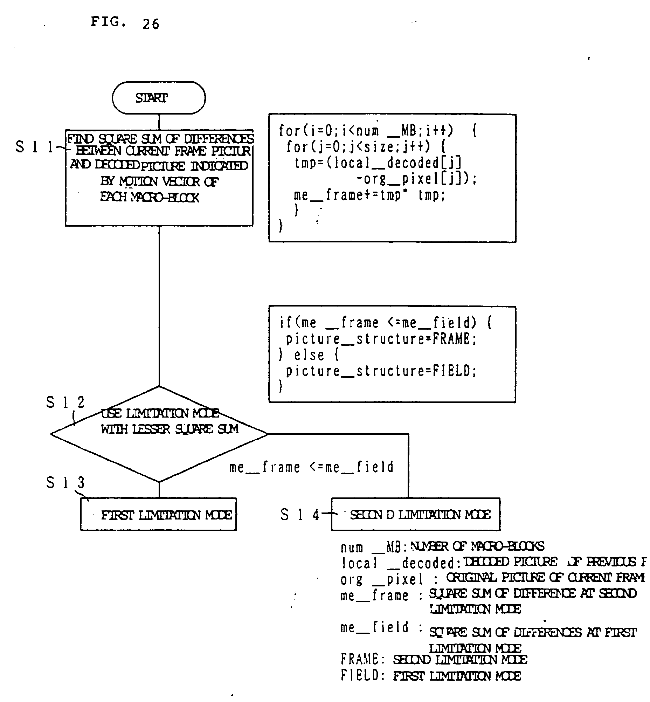

The flow chart of Figure 26 is a modification of mode selection by the limitation mode selecting means of the embodiment 3. At step S11, the difference between the previously decoded picture referred to by the motion vector and the current picture, for each of the macro-blocks of the current picture, is found, the square sums of the differences are found, and the limitation mode selection is made at step S12, using the thus found square sums. The square sums of the differences are found with the first and second limitation modes, and the limitation mode having the lesser values of the square sums is selected.

Similarly, with the fourth encoding device, the square sums of the differences in the slice being encoded are similarly found, and the limitation mode having the lesser value of the squared sum is selected.

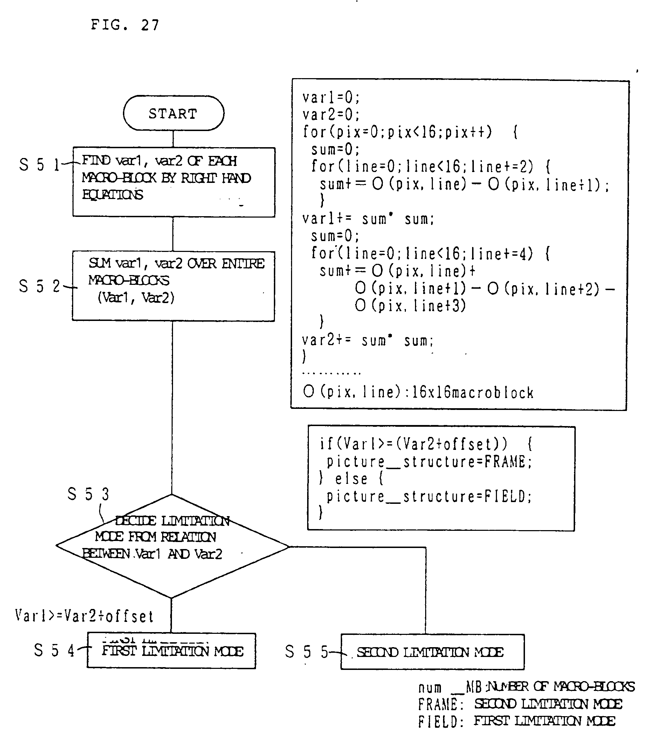

The flow chart of Figure 27 is a modification of mode selection by the limitation mode selecting means of the embodiment 3. The limitation mode is selected using the correlation between the odd and even fields of the current frame. At step S51 of the flow chart of Figure 27, var 1 and var 2 are first found.

At step S52, the values var 1 and var 2 are summed together for all of the macro-blocks present in the current frame. At step S53, the limitation mode is selected based on the thus found values var 1 and var 2. If var 1 >= var 2 + offset, the first limitation mode is selected and, if otherwise, the second limitation mode is selected.

In the fourth encoding device, var 1 and var 2 are summed for all of the macro-blocks in the slice being encoded to find Var 1 and Var 2. The limitation mode is selected from the relation between Var 1 and Var 2. If Var 1 <= Var 2 + offset, the first limitation mode is selected and, if otherwise, the second limitation mode is selected.

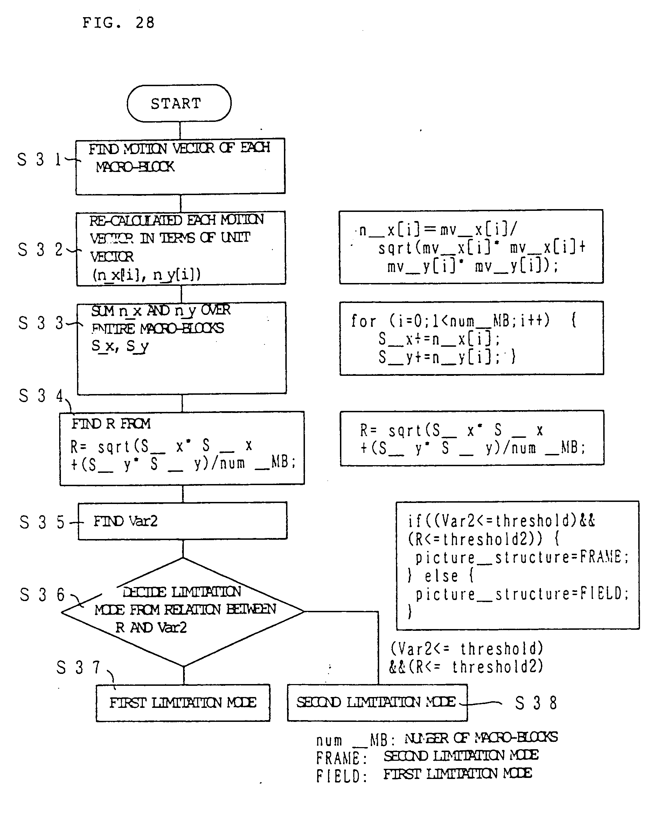

Similarly, the flow chart of Figure 28 is a modification of mode selection by the limitation mode selecting means of the embodiment 3. With the third encoding device, limitation mode selection is made using the motion vectors and the correlation between the first and second fields of the current frame. At step S31, the motion vectors of each macro-block, as found at step S31, are converted into unit vectors [n_x[i], n_y[i]]. If the motion vectors are (mv_x, mv_y), the following equations 4 and 5 hold:

$$n\_x = mv\_x / \sqrt{(mv\_x)^2 + (mv\_y)^2} \qquad\qquad \text{equation 4}$$

$$n\_y = mv\_y / \sqrt{(mv\_x)^2 + (mv\_y)^2} \qquad\qquad \text{equation 5}$$

At step S33, the sum vector SMV(S_x, S_y), as found by summing all of the unit vectors, is found. At step S34, the magnitude of the sum vector SMV divided by the number of the macro-blocks num_MB, as indicated by the equation 6, is denoted as R.

$$R = \sqrt{(S\_x)^2 + (S\_y)^2} / num\_MB \qquad\qquad \text{equation 6}$$
$$= \sqrt{(\Sigma\ n\_x[i])^2 + (\Sigma\ n\_y[i])^2} / num\_MB$$

The value R is a statistic quantity employed in verifying vector anisotropy. For example, if the motion vector exhibits anisotropy, that is if the picture in its entirety is moved significantly, the value R assumes a larger value.

The limitation mode is set at step S36 from the relation between the value R and Var 2 as found from the flow chart of Figure 27. For example, if Var 2 is not more than a certain threshold and R is not more than a certain threshold, the second limitation mode is selected and, if otherwise, the first limitation mode is selected (step S37).

Meanwhile, with the fourth encoding device, R and Var 2 are similarly found in the slice being encoded for selecting the limitation mode. If Var 2 is not more than a certain threshold and R is not more than a certain threshold, the second limitation mode is selected and, if otherwise, the first limitation mode is selected.

The device of the present embodiment includes an address generator 35 for recognizing if the cycle is an odd cycle or an even cycle and controlling the frame memory group 10 for outputting the macro-blocks divided into blocks in association with the block-forming modes for orthogonal transform for the odd cycles if the limitation mode is the second limitation mode and also controlling the frame memory group 10 for outputting the macro-blocks divided into blocks in association with the block-forming modes for orthogonal transform for the odd and even cycles if the limitation mode is the first limitation mode, and a frame memory group fitted with a motion compensator 20, as motion compensation means, for receiving the processing mode information selected by the processing mode selecting means (frame motion prediction frame orthogonal transform / field motion prediction field processing mode data) and for executing the motion-compensated interframe or interfield prediction responsive to the mode information.

With the present encoding device, three encodings are possible, namely the intra-frame encoding (I-frame or I-picture), predictive interframe encoding (P-frame or P-picture) and bidirectional interpicture coding (B-frame or B-picture), as shown in Figure 44. Each picture is divided into blocks each consisting of 8 * 8 pixels, with 2 * 2 blocks, that is 16 * 16 pixels, making up each macro-block.

It is noted that, with the encoding device of the embodiment 3, the above-mentioned first mode selecting means select which of the frame predictive mode or the field predictive mode is more efficient for motion compensation, whereas the above-mentioned first mode selecting means select which of the frame processing mode or the field processing mode is more efficient for orthogonal transform. Meanwhile, the selection of the first and the second modes is performed by the above-mentioned frame/field processing mode decision circuit 33.

With the encoding device of the embodiment 3, not only the mode selection is made by the processing mode selecting means, but also the encoding is performed for each frame in accordance with one of the two processing modes which is more efficient. That is, with the first limitation mode, direction into the blocks for orthogonal transform of the entire macro-blocks in each frame is carried out in accordance with the field processing mode, only the odd fields in the macro-blocks are encoded in an amount corresponding to one frame during odd-numbered cycles and the even fields in the macro-blocks are encoded in an amount corresponding to one frame during even-numbered cycles. The odd-numbered and even-numbered cycles mean the periods of scanning of odd-numbered and even-numbered fields in interlaced scanning, respectively. With the second limitation mode, each macro-block is encoded by adaptively changing over between the frame processing mode and the field processing mode for each macro-block within a frame. The limitation mode selecting means decide which of these first and second limitation modes is more efficient for encoding and the more efficient limitation mode is selected.

That is, with the above-mentioned second limitation mode, the mode of dividing each frame into blocks without dividing the frame into a first field or odd field and a second field or even field followed by encoding (the above-mentioned frame processing mode) is adaptively changed over to the mode of dividing each frame into the first and second fields and dividing the fields into blocks followed by encoding (the above-mentioned field processing mode) or vice versa in such a manner that the frame and field processing modes are used for a macro-block presenting small picture movements and a macro-block presenting significant picture movements, respectively.

Consequently, if the frame processing mode is selected for the second limitation mode, motion prediction is made from the forward and backward frames for motion prediction for the P and B frames, and the differential picture from the prediction-coded picture is processed with DCT. On the other hand, if the field processing mode is selected for the second limitation mode, motion prediction for the P and B frames is made from the first and second fields of the forward and backward frames for each of the first and second fields of the macro-blocks, and the differential picture from the prediction picture is processed with DCT. From this it may be said that the second limitation mode represents encoding without intra-frame prediction, interframe. Besides, with the second limitation mode, encoding is performed within the odd-numbered cycles. Meanwhile, the second limitation mode may be defined as being intra-frame interfield encoding.

With the second limitation mode, motion prediction between the fields within a frame, that is between odd and even fields within the same frame, cannot be made.

In this consideration, with the first limitation mode of the embodiment 3, division into blocks of all of the macro-blocks within each frame for orthogonal transform is made with the field processing mode. Specifically, only the odd fields in each macro-block are encoded for the odd-numbered cycles in an amount corresponding to one frame and subsequently the even fields in each macro-block are encoded for the even-numbered cycles in an amount corresponding to one frame. Therefore, with the present first limitation mode, since the odd fields (first fields) are encoded first, motion prediction for the even fields (second fields) may be made from the odd fields (first fields). Meanwhile, it may be said from this that the first limitation mode is frame encoding with intra-frame interfield prediction.

Returning to Figure 20, the main flow of picture data to be encoded by the encoding device of the embodiment 3 is explained by referring to Figure 20.

In this figure, digital picture signals are supplied to input terminal 1 so as to be stored in frame memory group 10. The above-mentioned 16 * 16 pixel unit macro-block data are read from frame memory group 10, under control by an address generator 35 as later described, and transmitted to a difference detector 12. The difference detector 12 is also supplied with motion-compensated picture data from the frame memory group fitted with motion compensator 20 as later described and a difference therebetween is detected by the difference detector 12.

An output of difference detector 12 is supplied to a DCT circuit 13 for orthogonal transform (DCT). The DCT coefficient data, produced by DCT by DCT circuit 13, is supplied to quantizer 14. Quantized data from quantizer 14 is outputted at output terminal 2 as encoded data via a buffer 16 and a variable length encoding circuit 15 for performing variable length encoding, such as Huffman coding or run-length coding.

The frame memory group fitted with motion compensator 20 is supplied with quantized data from quantizer 14 via a dequantizer 17, an inverse DCT circuit 18 and an additive node 19. The additive node 19 adds the output of the inverse DCT circuit 18 to the output of the frame memory group fitted with motion compensator 20. Meanwhile, the information for inhibiting overflow of the buffer 16 is fed back to the quantizer 14.

On the other hand, picture data outputted on the macro-block basis from the frame memory group 10 is transmitted to the frame motion detection circuit 22 and the field motion detection circuit 21.

The frame motion detection circuit 22 detects the sums of the differences of absolute values of the pixels and the motion vectors between the frames on the macro-block basis and outputs the data (frame-to-frame motion vector data FMMV and data of the sums of the differences of the absolute values FMAD). On the other hand, the field motion detection circuit 21 detects the sums of the differences of absolute values of the pixels and the motion vectors between the fields on the macro-block basis and outputs the data (field-to-field motion vector data FDMV and data of the sums of the differences of the absolute values FDAD). The motion vector data FMMV/FDMV of the respective motion vectors of these motion detection circuits 21, 22 are transmitted to selector 24.

The data of the sums of the differences of the absolute values FMAD/FDAD and motion vector data FMMV/FDMV from the frame motion detection circuit 22 and the field motion detection circuit 21 are also supplied to the frame/field mode decision circuit 33.

The frame/field mode decision circuit 33 decides, at the time of motion prediction by the frame memory fitted with motion compensator as later explained, which of the frame-by-frame motion prediction or field-by-field motion prediction is to be performed, based on the data of the sums of the differences of the absolute values FMAD and FDAD from the frame motion detection circuit 22 and the field motion detection circuit 21, and outputs data indicating a prediction mode of the more efficient mode. Specifically, if it is found by the frame/field mode decision circuit 33 that the difference between the data FMAD and FDAD is larger than threshold T1 (FMAD - FDAD > T1), the circuit 33 outputs data (data MPFD of the field prediction mode in the motion prediction) indicating that field-by-field motion prediction is more efficient. Conversely, if it is found by the frame/field mode decision circuit 33 that the difference between the data FMAD and FDAD is equal to or less than the threshold T1 (FMAD - FDAD ≤@T1), the circuit 33 outputs data (data MPFM of the frame prediction mode in the motion prediction) indicating that frame-by-frame motion prediction is more efficient.

One of these prediction mode data MPFM/MPFD is transmitted to the frame memory group fitted with the motion compensator 20, while being simultaneously supplied to selector 24.

The selector 24 selectively outputs, responsive to prediction mode data MPFM/MPFD from frame/field mode decision circuit 33, one of the data FMMV of the frame-to-frame motion vector supplied from the frame motion detection circuit 22 and the data FDMV of the field-to-field motion vector supplied from the field motion detection circuit 21. That is, the selector 24 selects and outputs the motion vector data FDMV from the field motion detection circuit 21 when the prediction mode data is the data NPFD indicating the field prediction mode data, while selecting and outputting the motion vector data FMMV from the frame motion detection circuit 22 when the prediction mode data is the data MPFM indicating the frame prediction mode data. The motion vector data FMMV/FDMV, as selected by selector 24, is transmitted to frame memory fitted with motion compensator 20. The frame memory fitted with motion compensator 20 is now able to effect frame-by-frame or field-by-field motion compensation on the basis of the prediction mode data MPFM/MPFD and motion vector data FMMV/FDMV.

The frame/field mode decision circuit 33 is also supplied with picture data as read out from the frame memory group 10 on the macro-block basis. The frame/field mode decision circuit 33 also performs the operation of producing a differential picture from the prediction mode data MPFM/MPFD, motion vector data FMMV/FDMV and the picture data from the frame memory group 10 and selects the processing mode for block formation for orthogonal transform (the above-mentioned frame processing mode/field processing mode) most suitable for the picture which is outputted from the frame memory group 10 and processed by DCT by the DCT circuit 13. If the current picture is the I-picture or I-frame, data of the picture of the frame memory group 10, that is the original picture, are used.

If the difference between the difference EFM found on the frame-by-frame basis and the difference FFD found on the field-by-field basis, using the equations (1) and (2), is found to be larger than a threshold T2 (EFM - EFD > T2), the frame/field mode decision circuit 33 outputs data indicating that the DCT by the DCT circuit 13 be performed on the field-by-field basis (data MDFD for the field processing mode in the block forming operation for orthogonal transform). Conversely, if the difference between the differences EFM and EFD is equal to or less than the threshold T2 (EFM - EFD > T2), the frame/field mode decision circuit 33 outputs data indicating that the DCT by the DCT circuit 13 be performed on the frame-by-frame basis (data MDFM for the frame processing mode in the block forming operation for orthogonal transform).

The output of the frame processing mode data MDFM or the field processing mode data MDFD from the frame/field mode decision circuit 33 is responsive to the first limitation mode or the second limitation mode from the limitation mode decision circuit 34 (EN1/EN2).

The limitation mode decision circuit 34 decides, using the macro-block based picture data as read from the frame memory group 10, which of the first and second limitation modes is more efficient for encoding, and outputs the encoding mode data EN1 or EN2 depending on the results of decision. Specifically, the limitation mode decision circuit 34 calculates the sum of the differences of absolute values of the pixels between the odd fields (first fields) and the even fields (second fields) of the frames to output the limitation mode data EN1 indicating that the encoding under the second limitation mode is more efficient if the sum value is less than a certain threshold T0, that is if the picture experiences little motion, while outputting the limitation mode data EN2 indicating that the encoding under the first limitation mode is more efficient if the sum value is larger than the threshold T0, that is if the picture experiences acute motion.

Meanwhile, the decision by the limitation mode decision circuit 34 may also be given using the motion vector data FDMV from the field motion detection circuit 21. That is, it is also possible to select the second limitation mode if the motion vector data FDMV between the odd field and the even field is less than a certain threshold t0 and to select the first limitation mode if the data FDMV is larger than the threshold t0.

By the limitation mode data EN1/EN2 being transmitted from the limitation mode decision circuit 34 to the frame/field mode decision circuit 33, the frame processing mode data MDFM or the field processing mode data MDFD responsive to the encoding mode data EN1/EN2 is outputted from the frame/field mode decision circuit 33.

That is, if the limitation mode data from the limitation mode decision circuit 34 is the data EN1 indicating the second limitation mode, the frame/field mode decision circuit 33 performs an operation of adaptively changing over the frame processing mode to the field processing mode or vice versa for each macro-block in one frame. Consequently, the frame/field mode decision circuit 33 outputs the adaptively changed over frame processing mode data MDFM or field processing mode data MDFD.

Conversely, if the limitation mode data from the limitation mode decision circuit 34 is the data EN2 indicating the first limitation mode, the frame/field mode decision circuit 33 performs the operation of division into blocks of all of the macro-blocks in one frame for orthogonal transform in accordance with the field processing mode. Consequently the field processing mode data MDFD is outputted from the frame/field mode decision circuit 33.

The frame/field orthogonal transform block-forming mode data MDFM/MDFD, outputted from the frame/field mode decision circuit 33, and the limitation mode data EN1/EN2 from the limitation mode decision circuit 34, are transmitted to the address generator 35 and to the frame memory group fitted with the motion compensator 20. Meanwhile, the processing mode data MDFM/MDFD, encoding mode data EN1/EN2 and the motion vector data FMMV/FDMV are also transmitted to the above-mentioned variable length encoding circuit 15.

The address generator 35 controls the frame memory group 10 to output picture data of the macro-blocks divided into blocks in accordance with the processing mode data MDFM/MDFD and the limitation mode data EN1/EN2 on the macro-block basis. Specifically, address generator 35 controls the frame memory group 10 to output macro-blocks divided into blocks in accordance with the block-forming mode for orthogonal transform (data MDFM/MDFD) for odd cycles if the limitation mode data EN1/EN2 is the data EN1 indicating the second limitation mode, while controlling the frame memory group 10 to output macro-blocks divided into blocks in accordance with the field processing mode (data MDFD) for odd and even cycles if the limitation mode data EN1/EN2 is the data EN2 indicating the first limitation mode.

In other words, if, with the second limitation mode having been selected and the limitation mode data EN1 being supplied to address generator 35, the processing mode data is MDFM indicating the frame-by-frame DCT, address generator 35 controls the frame memory 10 to output macro-blocks in which even and odd fields are alternately scanned, that is frame-based macro-blocks each combined from odd and even fields, as shown in Figure 3. That is, address generator 34 controls the frame memory group 10 to divide a macro-block having lines 1 to 16 into lines 1 to 8 and lines 9 to 16 and to output four of 8 * 8 blocks, as shown in Figure 3.

On the other hand, if, with the second limitation mode having been selected and the limitation mode data EN1 being supplied to address generator 35, the processing mode data is MDFD indicating the field-by-field DCT, address generator 35 controls the frame memory 10 to output macro-blocks in which even and odd fields are scanned separately, that is separate field-based macro-blocks for even and odd fields, as shown in Figure 4. That is, address generator 34 divides the lines 1 to 16 into lines 1, 3, 5, 7, 9, 13 and 15 (lines of the odd fields or the first fields) and lines 2, 4, 6, 8, 10, 12, 14 and 16 (lines of the even fields or the second fields), as shown in Figure 4, and to output two 8 * 8 blocks for each of these odd fields and even fields.

On the other hand, if, with the first limitation mode having been selected and the limitation mode data EN2 being supplied to address generator 35, address generator 35 controls the frame memory group 10 to output macro-blocks divided into blocks in accordance with the field processing mode for the odd and even cycles, as described previously. That is, if the first limitation mode is selected, address controller 35 controls the frame memory group 10 so that two 8 * 8 blocks (only luminance components, as described subsequently) are outputted at all times. Specifically, address generator 35 controls the frame memory group 10 so that the two 8 * 8 block macro-block) is outputted in an amount corresponding to one frame (one picture) only for odd fields during the odd cycles, while controlling the frame memory group 10 so that the two 8 * 8 block (macro-block) is outputted in an amount corresponding to one frame (one picture) only for even fields during the even cycles.

The picture data outputted from the frame memory group 10 controlled by address generator 35 is processed with DCT by the DCT circuit 13, as described above. If, for example, the second limitation mode and the frame processing mode are selected, DCT circuit 13 effectuates DCT on unit blocks of 8 * 8 pixels as shown in Figure 3. If, for example, the second limitation mode and the field processing mode are selected, DCT circuit 13 effectuates DCT on unit blocks of 8 * 8 pixels as shown in Figure 4. If the first limitation mode is selected, DCT circuit 13 effectuates DCT on the 8 * 8 pixel blocks only for odd fields during the odd cycles and on the 8 * 8 pixel blocks only for even fields during the even cycles.

Besides, the prediction mode data MPFM/MPFD and processing mode data MDFM/MDFD from the frame/field mode decision circuit 33, motion vector data FMMV/FDMV as selected by selector 24 and the limitation mode data EN1/EN2 from the limitation mode decision circuit 34 are also supplied to the frame memory fitted with the motion compensator 20. Thus the frame memory fitted with the motion compensator 20 is not only responsive to the prediction mode data MPFM/MPFD of motion prediction, processing mode data MDFM/MDFD of DCT processing and to the encoding mode data EN1/EN2, but also effectuates motion compensation with the aid of the motion vector data FMMV/FDMV.

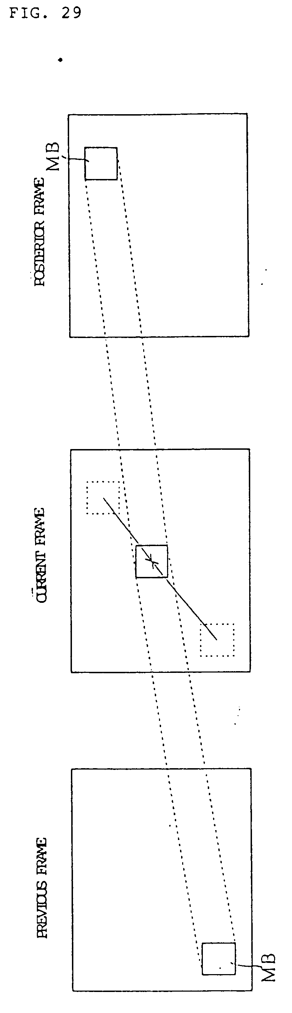

For the second limitation mode and the frame processing mode, motion detection of the P and B frames may be made from the forward and backward frames, as shown in Figure 29. Thus, in the DCT circuit 13, a differential picture from the prediction-coded picture is processed with DCT by unit blocks of 8 * 8 pixels. In Figure 29, the forward, current and backward frames are shown, with the arrow indicating the motion vector and MB macro-blocks.

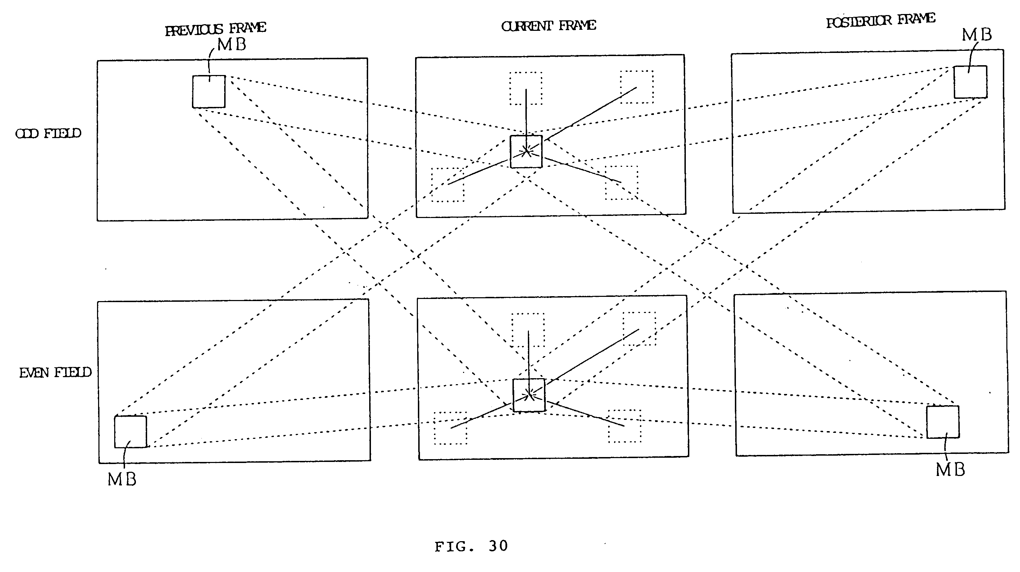

For the first limitation mode and the field processing mode, motion detection of the P and B frames may be made from the odd and even fields (first and second fields) of the forward and backward frames for each of the odd fields and even fields, as shown in Figure 30. In Figure 30, odd and even fields of the forward, current and backward frames are shown, with the arrow mark indicating the motion vector and MB macro-blocks.

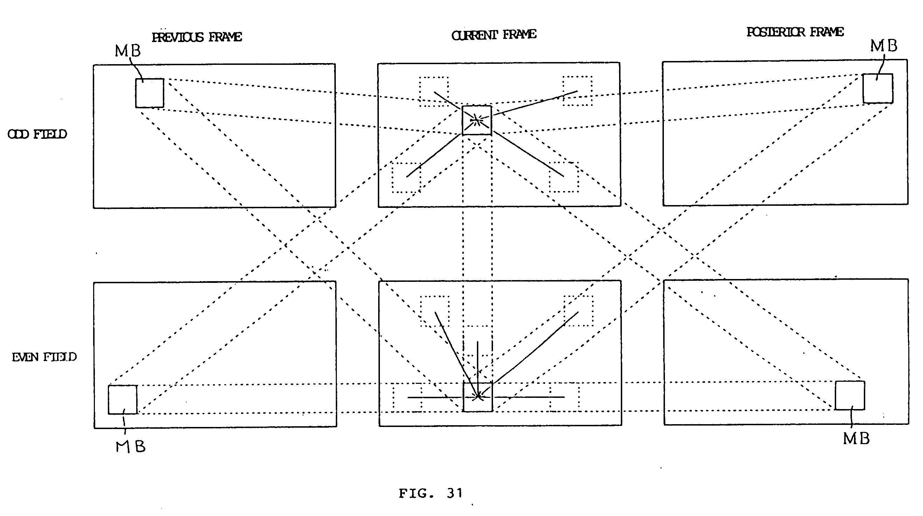

For the first limitation mode and the field processing mode, motion prediction of the odd and even fields of the macro-blocks is performed from the odd and even fields of the forward and backward frames, as shown in Figure 31. Motion prediction between the fields in each frame is also made. Consequently, a differential picture from the prediction-coded picture is processed with DCT by the DCT circuit 13 by the unit 8 * 8 pixel blocks. In Figure 31, odd and even fields of the forward, current and backward frames are shown, with the arrow mark indicating the motion vector and MB macro-blocks.

With the above-described high efficiency encoding device of the embodiment 3, high efficiency encoding is achieved by changing over between encoding without intra-frame interfield prediction and encoding with intra-frame interfield prediction depending on the first and second limitation modes, that is on the degree of motion in the picture. Above all, the first limitation mode is effective for a frame with significant movement.

Meanwhile, with the encoding device of the embodiment 3, the present code is realized by adding extension bits to the conventional macro-block type for interchangeability with the conventional system.

That is, in the embodiment 3, the macro-block type has three predictions, namely forward prediction, backward prediction and bidirectional prediction. Since prediction from odd-numbered fields of the previous frame and prediction-coded fields of the previous field are possible with the forward prediction, the present code is realized by appending extension bits useful for recognizing which of these predictions is used. Since there are two predictions, it suffices to add one bit for one direction, that is for the forward or backward direction. For example, if the prediction is forward or backward prediction and from the odd-numbered fields, it suffices to add a code 1 as an extension bit to the conventional macro-block type. Similarly, if the prediction is from the even-numbered field, it suffices to add a code 0 as an extension bit to the conventional macro-block type. For bidirectional prediction, both extension bits are appended for both forward and backward predictions.

Meanwhile, for a frame prediction mode, no extension bits are appended, so that the bit string is of the same style as the conventional bit stream (MPEG).

The above applies to the P-frame as well.

In the embodiment 3, similarly to the preceding embodiment, the macro-block type has three predictions, namely forward prediction, backward prediction and bidirectional prediction for e.g. the B-frame. If the prediction is the forward prediction with the field prediction mode, it is necessary to append extension bits to the macro-block for allowing to recognize if, when the prediction is for forward prediction and the field prediction mode, the prediction is that from an odd-numbered field, an even-numbered field or from an odd-numbered field of the current frame. That is, since there is a prediction from the own frame in the forward field prediction mode, one or two bits are required for expressing three predictions including odd- and even-numbered predictions by extension bits. On the other hand, for backward field prediction mode, since there are two predictions, that is prediction for odd and even numbers, 1 extension bit is required.

If the mode is the frame prediction mode, no extension bits are annexed, so that the bit string is of the same style as the conventional bit stream (MPEG). For bidirectional prediction, both extension bits are annexed for forward or backward prediction.

The above applies to he P-frame as well.

As a modification, the number of the extension bits can be reduced to one for forward prediction. That is, in the even-numbered cycle for the field prediction mode, the number of bits may be reduced to two and the forward prediction mode may be transmitted by one extension bit by abolishing prediction from the even-numbered field furthest removed both temporally and spatially, shown by chain-dotted line, as in the embodiment shown in Figure 16.

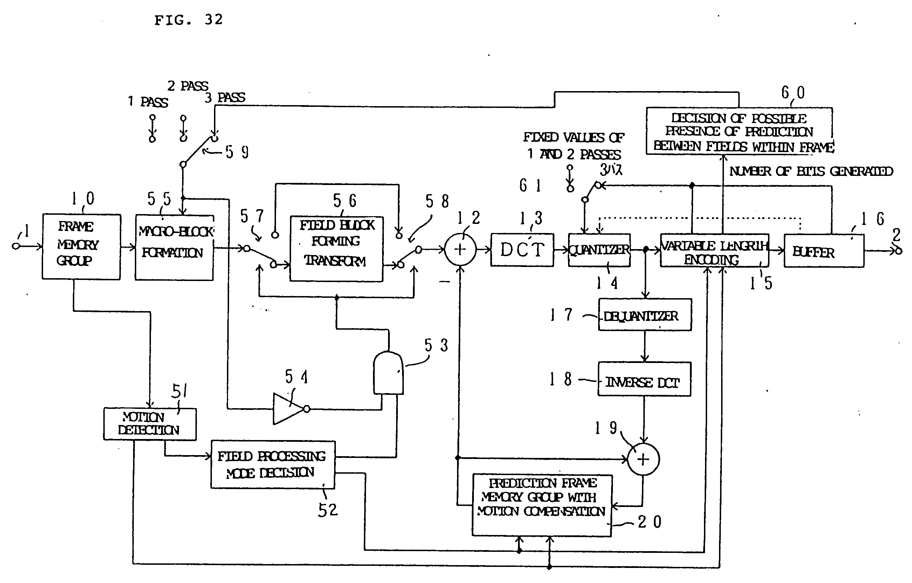

Figure 32 shows a typical arrangement of an encoding device of the second embodiment 3. In Figure 32, the same components as those shown in Figure 20 are denoted by the same reference numerals and detailed description thereof is omitted for simplicity.

The arrangement of the second embodiment 3 is a 3-pass encoding device n which three operations are carried out for processing each frame.

That is, an operation by the above-described first limitation mode by a fixed quantization width with intraframe interfield prediction is carried out for the first pass, and an operation by the above-described second limitation mode by a fixed quantization width without intra-field interframe prediction is carried out for the second pass. The operation of the first and second passes in which a smaller number of bits have occurred is selected for the third pass which is carried out with a controlled quantization width.

In the second embodiment 3, a macro-block unit 55, a changeover switch 57, a field block-forming transform circuit 56 and another changeover switch 58 are connected to a downstream side of the frame memory group 10. Picture data from the frame memory group 10 is transmitted to a motion detection circuit 51 effectuating fame and field motion detection. An output of the motion detection circuit 51 is transmitted to a processing mode decision circuit for selecting the frame/field modes for motion detection and block division for orthogonal transform 52, frame memory group 20 and the variable length encoding circuit 15.

Output mode data from the processing mode decision circuit 52 is transmitted to the frame memory group 20 and the variable length encoding circuit 15. Of these data, field processing mode data are supplied to one input terminal of a two-input AND gate 53. An output of the changeover switch 59, which is changed over depending on the pas numbers 1 to 3 is supplied to the other input terminal of the AND gate 53. An output terminal of the 2-input AND gate is connected to movable terminals of the changeover switches 57, 58.

Data of the number of the produced bits is outputted from the variable length encoding circuit 15 and transmitted to a selecting circuit 60 for selecting one of the first and second processing modes with smaller number of produced bits based on the data of the number of the produced bits (circuit for deciding whether or not there is intra-frame interfield prediction between the fields in one frame). The stored volume data from buffer 16 is transmitted to the variable length encoding circuit 15 and to one of the fixed terminals of the changeover switch 61. Fixed values of the first and second passes are supplied to the other fixed terminal of the changeover switch 61.

In the above-described second embodiment 3, the picture entered to terminal 1 is temporarily stored in the frame memory group 10. Frame or field data are fetched as required from the frame memory 10 and, using these picture data, the motion vector is found by the motion detector 51. The processing mode decision circuit 52 gives a decision of the field/frame mode for each macro-block from the motion prediction residues from the motion detector 51. The macro-block unit 55, connected to the downstream stage of the frame memory group 10, receives the information for the first, second and third passes, that is the information of the presence/absence of intra-frame interfield prediction which is the above-mentioned second or first limitation mode, via changeover switch 59. If the macro-block unit 55 has received the first limitation mode information, it transmits only the block of the odd field (first field) and subsequently transmits the even field (second field), while turning off the block division of the frame processing mode. The picture data the macroblocks of which are set to the frame processing mode based on the information of the second limitation mode in the macro-block unit 55 is set to the block of the frame processing mode in the field block division conversion circuit 56. 1 bit is added to the selected mode information for each frame.

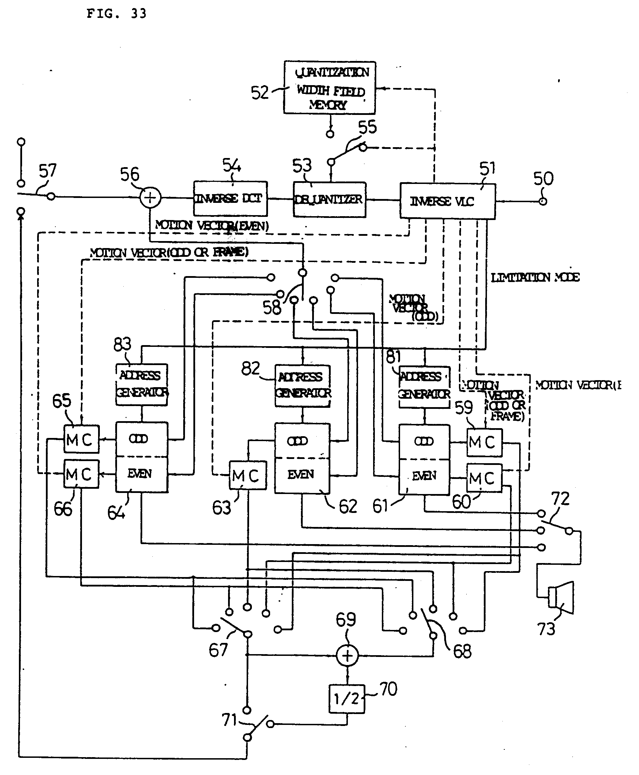

The block diagram of Figure 33 shows a decoder for picture signals. The third high efficiency decoding device includes inverse variable length encoding means for receiving and decoding encoded data of the playback picture and the header information including detected motion vector information, processing mode information and limitation mode information and outputting the detected motion vector information, processing mode information and limitation mode information simultaneously with decoded picture data, address generating means for calculating an address increment value at a frame buffer storing the decoded picture data from the limitation mode information, finding a leading address of each macro-block and according the leading address to the frame buffer, and motion compensating means for supplying the relative addresses of the macro-blocks other than the leading address, accessing the data, receiving the detected motion vector information, processing mode information and limitation mode information, executing motion compensation in association with the mode information, and transmitting motion-compensated picture signals to the frame buffer.

That is, the high efficiency decoding device of the present embodiment is made up of an inverse variable length encoding circuit 51 for receiving and decoding encoded picture data and the header information including the detected motion vector information, block-forming mode information (processing mode information) and limitation mode information (limitation mode data) and outputting the detected motion vector information, prediction mode information, processing mode information and limitation mode information of the header information simultaneously with the decoded picture data, address generators 81, 82 and 83 for calculating address increment values at frame buffers 61, 62 and 64 storing picture decoding data from the limitation mode data for finding the leading address of each macro-block and supplying the leading address to the frame buffers 61, 62 and 64, and motion compensation circuits 59, 60, 63, 65 and 66 for supplying the relative addresses of the macro-blocks other than the leading address to the frame buffers 61, 62 and 64 for data accessing, receiving the detected motion vector information, prediction mode information, processing mode information and limitation mode information, executing prediction between the motion compensated frames or fields in association with the mode information and transmitting the motion-compensated picture information to the frame buffers 61, 62 and 64.

Referring to Figure 33, data encoded by the high efficiency encoding device of the embodiment 3 are transiently recorded on a storage medium, such as CD. The encoded data reproduced form CD is supplied via input terminal 50 to an inverse variable length encoding circuit 51 where the header information etc. are decoded from one sequence to another, from one frame group to another and from one frame to another. The header information is decoded from one slice (macro-block group) to another. The quantization width is included in the slide header. The macro-block type indicating the macro-block addresses, frame/field prediction mode, frame/field processing mode, encoding mode data and the decoding system is decoded from one macro-block to another. The quantization width is decoded at the time of the updating.

Meanwhile, if the block formation in a macro-block is of the frame processing mode, the macro-block in its entirety is decoded for the odd-numbered cycle, while no data is decoded for an even-numbered cycle. If the block formation in a macro-block is of the field processing mode, only the block including odd-numbered fields in the macro-block is decoded for the odd-numbered cycle, while the block including even-numbered fields is decoded for the even-numbered cycles.

The picture information is decoded by a dequantizer 53 performing an operation which is the reverse of quantization and an inverse DCT circuit 54 performing an inverse DCT operation, and a decision is given by the macro-block type as to whether or not the information is a differential information. Depending on the results of decision, a mode switch 57 for changeover between addition or non-addition to the reference picture (or between non-intra/intra of MPEG coding) by an additive node 56. The decoded picture is entered to frame buffers 64 or 61 for the I-or P-frame (alternately each time the I-frame or the P-frame is processed) and to frame buffer 62 for the B-frame. Each frame buffer is composed of two field buffers and the odd/even field picture is stored separately in each of these field buffers. Recording in the frame buffers is controlled by changing over a switch 58.

The addresses recorded in the frame buffers 61, 62 and 64 are supplied from address generators 81, 82 and 83. The address generators 81, 82 and 83 calculate an address increment value in the frame buffers 61, 62 and 64 from the encoding mode data in the header information of the macro-block to find the leading address of each macro-block.

The quantization width data is stored in a one-field memory 52. The quantization width data is supplied to dequantizer 53 via switch 55 changed over depending on the output of the inverse variable length encoding circuit 51. Since only the macro-block processed with the field processing mode is decoded for the even-numbered cycles, the macro-block address decoded for each macro-block, the macro-block type and the motion vector required by the prediction system indicated thereby are decoded and the differential picture from the reference field is added to the motion-compensated picture to produce the playback picture.

On the other hand, data of the frame buffers 64, 62 and 61 is motion-compensated by the motion compensation circuits 65, 66, 59, 60 and 63. At this time, the respective motion compensation circuits change over the frame motion compensation/field motion compensation (frame/field) depending on the block-forming mode at the time of the DCT operation.

These motion-compensated pictures are transmitted to respective fixed terminals of changeover switches 67, 68 and 71. These changeover switches 67, 68, 71 are changed over for taking out the reference field or frame indicated by the decoding system of the macro-block decoding type. The changeover switch 71 is supplied with an output of switch 67 and a signal which is outputs of the changeover switches 67 and 68 added together by additive node 69 and subsequently halved by a divider 70. An output of switch 71 is supplied to switch 57.

Outputs of frame buffers 64, 61 ad 62 are supplied via changeover switch 72 to a display 73. The display 71 is supplied with the outputs of the changeover switch 72 which are changed over in the sequence of playback pictures instead of in the decoding sequence for producing an output picture.

Meanwhile, with the resent embodiment, since only the macro-block processed with the field processing mode is decoded during the even cycle, it is necessary to know a macro-block address. There are two methods for grasping the macro-block address. One is to transmit the address of the macro-block for each macro-block of the even cycle as described previously. The other method is to store the information of the one-field field processing mode/frame processing mode information during the odd-numbered cycle and to calculate the address of the macro-block in the field processing mode from the string of each processing mode. The former method has an advantage that it is unnecessary to add memories, whereas the latter method has an advantage that the transmitted information is not increased. The same may be said of the quantization width if the quantization width is transmitted for each macro-block without storing one-field data during the above-mentioned odd-numbered cycle.

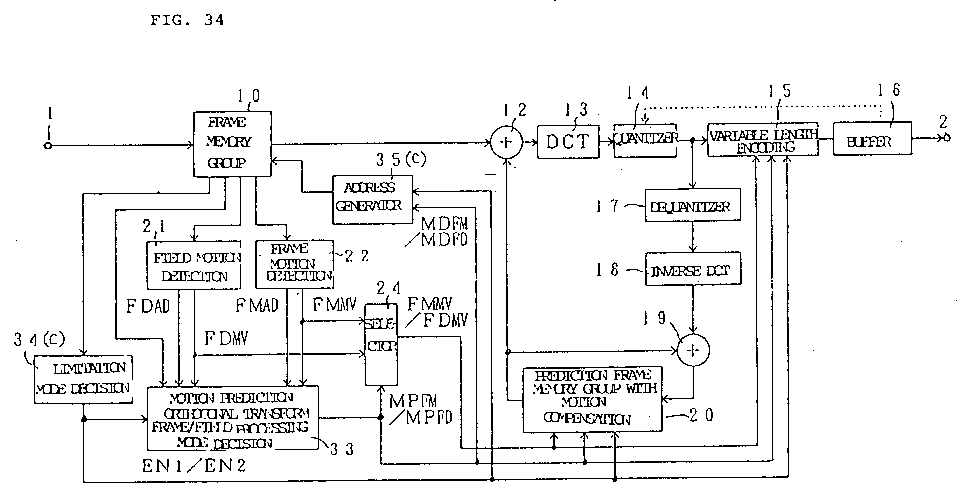

The advantages of the fifth encoding device shown in Figure 34 are explained. In this figure, the blocks denoted by the same numerals as those of Figs.1 and 5 have the same function. Therefore, only the blocks denoted by different numerals from those of Figs.1 and 5 are explained.

The high efficiency encoding device of Figure 34 includes, in addition to the blocks denoted by the same numerals as those of the high efficiency encoding device shown in Figs.1 and 5, an encoding mode decision circuit 34(c) and a selector 24, as limitation mode selecting means, for selecting the first limitation mode of inhibiting the encoding of the entire macro-blocks in one frame by the above-mentioned frame processing mode or the second limitation mode of inhibiting prediction of the even field of the current frame from the odd field of the same frame in the entire macro-blocks in one frame, whichever is more efficient, selecting only the first limitation mode for the bidirectional predicted frame (B-frame) and inhibiting prediction of the even field from the odd field of the B-picture, and an address generator 35(c), as address generating means, for controlling the frame memory group to output odd field components of the entire macro-blocks and to subsequently output even field components of the entire macro-blocks in case of selection of the first limitation mode for one frame, as well as to output the macro-blocks sequentially by one slice at a time on the basis of the frame composed of the odd and even field components of the entire macro-blocks in case of selection of the second limitation mode.

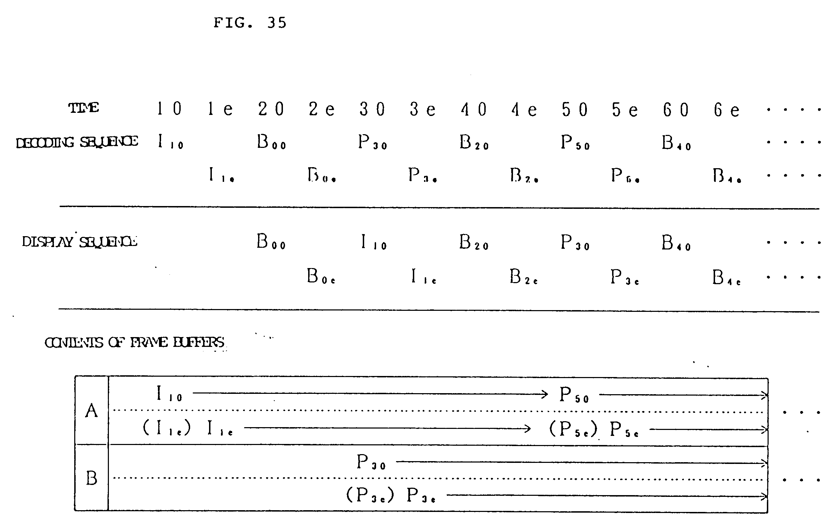

It is assumed that, with the encoding device of the embodiment 5, the picture sequence in the display time is B0o, B0e, I1o, I1e, B2o, B2e, P3o, P3e, B4o, B4e, P5o, P5e, ..., as shown in Figure 35.

The code sequence or decoding sequence of the present embodiment is I1o, I1e, B0o, B0e, P3o, P3e, B2o, B2e, P5o, P5e, B4o, B4e.

Meanwhile, for decoding the codes by the second encoding device using a decoding device, playback is rendered possible by having three frame buffers, that is six fields, at the maximum.

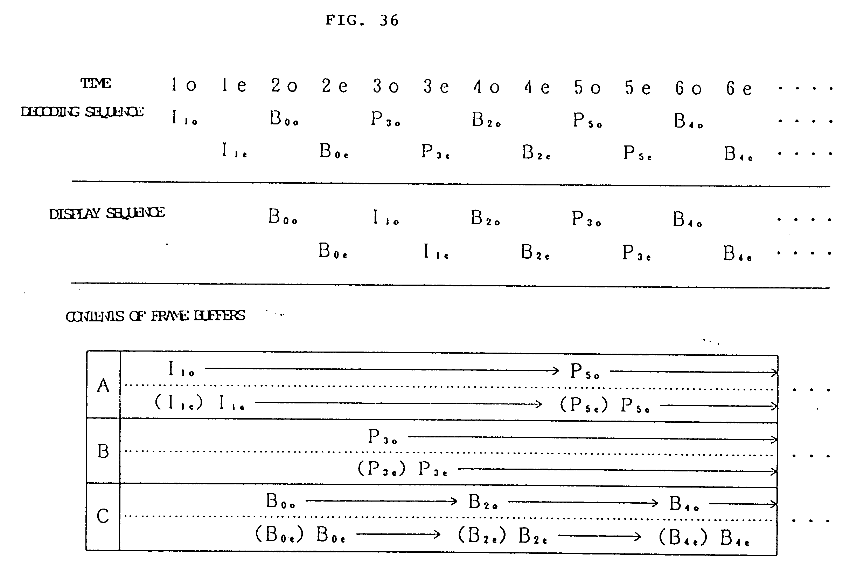

The operation of the decoding device having 3-frame frame buffers A, B and C is explained by referring to Figure 36. For using the frame buffers, the decoded pictures of the I-frames or P-frames are stored by alternately changing over between the frame buffers A and B. Display is made of the contents of the frame buffer opposite to that used for storage of the current frame and in the sequence of odd and even fields. In other words, for storing the picture in frame buffer A, the contents of the frame buffer B are displayed, whereas, for storing the picture in frame buffer B, the contents of the frame buffer A are displayed. Two frames need to be stored in the frame buffers so as to be used as reference frames for motion compensation of the B- or P-frames to be decoded subsequently.

For decoding the B-frame, the decoded picture is stored in frame buffer C. Display is made of the contents of the frame buffer C in the sequence of the odd fields and the even fields. If decoding is performed according to such rule, the entire components of I10 and the decoded picture of the even components of the macro-blocks of the frame-based block-forming frame-based prediction mode of I1e are stored at time 1, while motion compensation is made at time 1e by referring to the contents of the frame buffer A at time 1e and the decoded picture of the even field components of the macro-blocks of the field-based block forming field-based prediction mode of I1e is stored at time 1e in frame buffer A.

At time 10, and at time 1e, the odd and even components of frame buffer B are displayed, respectively. In the absence of the previous codes, the contents of the frame buffer B at this time point become indefinite.

At this time 20, the pictures of the frame buffers A and B are motion-compensated, and the entire components of B0o and the decoded picture of the even field components of the macro-blocks of the frame-based block forming frame-based prediction mode of B0o are stored. At time 2e, the pictures of the frame buffers A, B and C are motion-compensated, and the decoded picture of the even field-based components of the macro-blocks of the frame-based block forming frame-based prediction mode of B0e are stored.

At time 2e, the pictures of the frame buffers A, B and C are motion-compensated, and the decoded picture of the even field components of the macro-blocks of the frame-based block forming-based frame prediction mode of B0e are stored in the frame buffer C.

At time 2o and at time 2e, the odd components and even components of the frame buffer C are displayed, respectively.

When B0e is displayed, the odd cycle of the B-frame is being decoded, such that both the components of B0o and b0e are contained. Therefore, the picture components of B0e, decoded at this time, need to be stored for being displayed temporally posteriorly.

When B0e is displayed, the even cycle of the B-frame is being decoded, and the remaining components of B0e which has not been decoded during the odd cycle are decoded. Consequently, since it is necessary to make motion compensation of the pictures from B0o to B0e, the picture of B0o needs to be stored.

Therefore, a one-frame frame buffer becomes necessary for the B-frame, such that a three frame buffer is required for decoding the codes formed by the second encoding device.

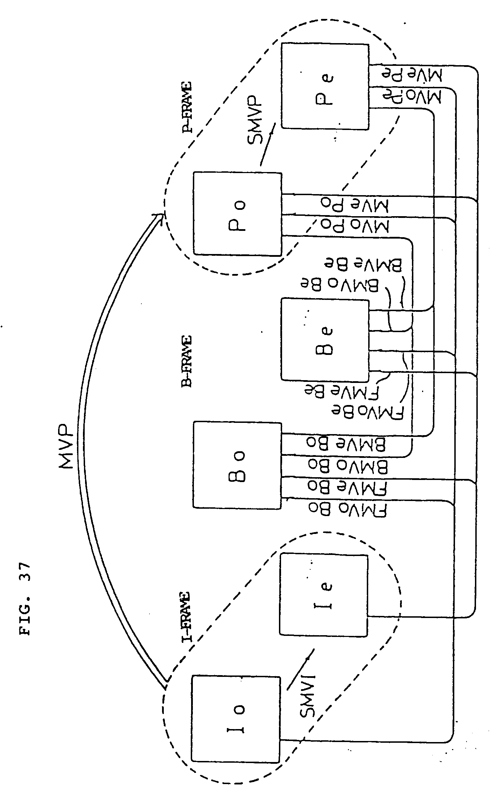

With the fifth encoding device, as shown in Figure 37, the encoding mode of the B-frame is carried out only by dividing the field into blocks for field prediction, while prediction of an even field from an odd field of the B-frame is inhibited. Thus, as shown in Figure 35, only B0o is decoded at time 2o and simultaneously B0o is displayed. This picture need not be stored because it is not used for subsequent motion compensation.

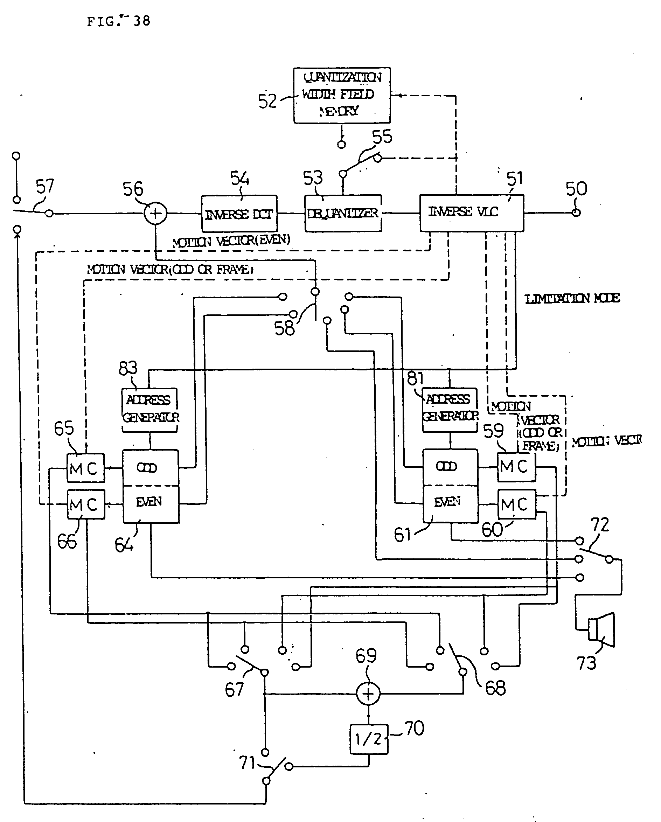

At time 2e, only B0e is decoded and simultaneously B0e is displayed, so that B0e need not be stored. Consequently, the decoding device for decoding the codes prepared by the fifth encoding device need not be provided with the frame buffer C. Such codes may be decoded by a decoding device having only a 2-frame buffer, that is a four-field buffer, as shown in Figure 38, for enabling the size and costs of the decoding device to be reduced.

At time 3o, the picture of frame buffer A is motion-compensated, and the entire components of P3o and the decoded picture of the even field components of the macro-blocks of the frame-based block forming frame-based prediction mode of P3e are stored in frame buffer B. At time 3e, motion compensation is made by referring to the contents of the frame buffers A and B and the decoded picture of the even field components of the macro-blocks of the frame-based block forming field-based prediction mode of P3e are stored in frame buffer B.

At time 3e, the pictures of frame buffers A and B are motion-compensated, and the decoded picture of the even field components of the macro-blocks of the field-based block forming field-based prediction mode of P3e are stored in frame buffer B.

At time 3e and at time 3e, odd components and even components of the frame buffer A are displayed, respectively.

Subsequently, the decoding and display proceed in a similar manner.

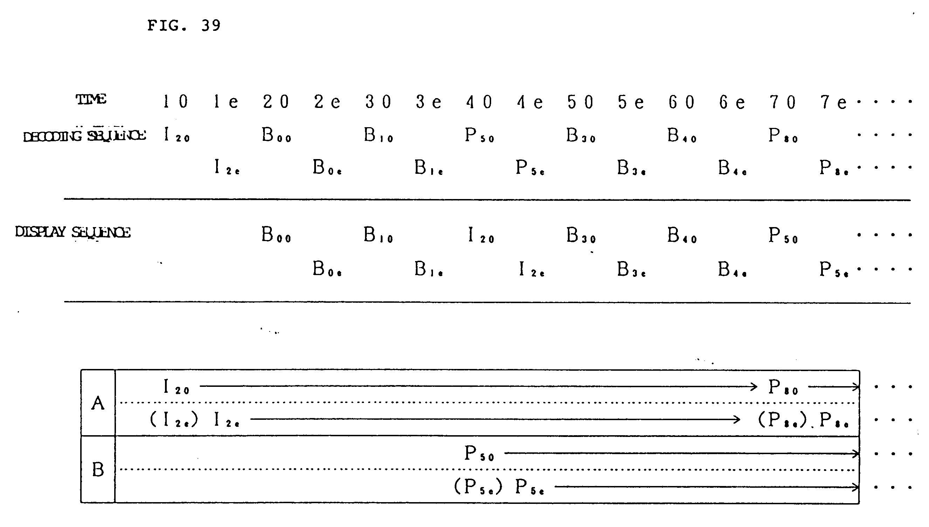

If the GOP sequence is B0o, B0e, B1o, B1e, I2o, I2e, B3o, B3e, B4o, B4e, P5o P5e, as shown in Figure 39, that is, if decoding is performed so that there are two B-frames between I and P frames or between two B frames, decoding may be made by the same decoding device, if the above-described decoding sequence is used, as shown in Figure 38.

The same may be said of a case wherein there are more than two B frames between frames or between two P frames.

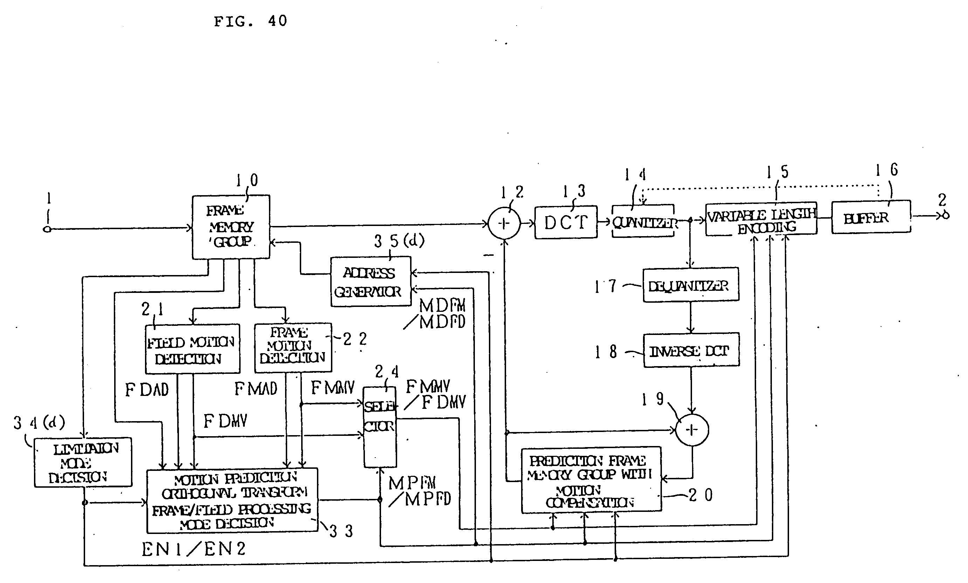

The advantages of the sixth encoding device, arranged as shown in Figure 40, are explained. In this figure, the blocks denoted by the same numerals as those of Figs.1 and 5 have the same function. Therefore, only the blocks denoted by different numerals from those of Figs.1 and 5 are explained.

The high efficiency encoding device of Figure 40 includes, in addition to the blocks denoted by the same numerals as those of the high efficiency encoding device shown in Figs.1 and 5, an encoding mode decision circuit 34(d) and a selector 24, as limitation mode selecting means, for selecting the first limitation mode of inhibiting the encoding of the entire macro-blocks in one frame by the above-mentioned frame processing mode in the entire macro-locks in one frame, or the second limitation mode of inhibiting prediction of the even field of the current frame from the odd field of the same frame, whichever is more efficient, selecting only the first limitation mode for the bidirectional predicted frame (B-frame), inhibiting prediction of the even field from the odd field of the B-picture, and inhibiting prediction from an odd field of a frame which is to be a reference frame for forward prediction for the B-picture, and an address generator 35(d), as address generating means, for controlling the frame memory group to output odd field components of the entire macro-blocks and to subsequently output even field components of the entire macro-blocks in case of selection of the first limitation mode for one frame, as well as to output the macro-blocks sequentially by one slice at a time on the basis of the frame composed of the odd and even field components of the entire macro-blocks in case of selection of the second limitation mode.

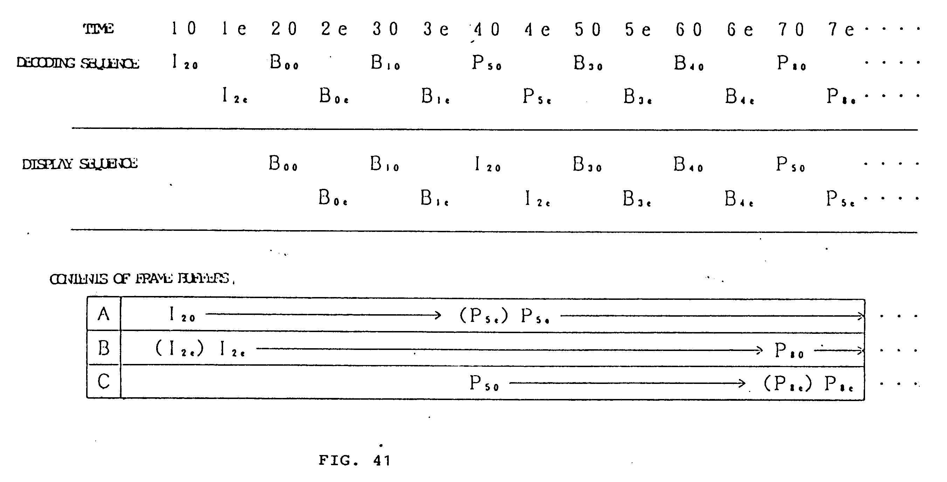

It is assumed that, in the present embodiment, the display time sequence is B0o, B0e, B1o, B1e, I2o, I2e,. B3o, B3e, B4o, B4e, P5o P5e, ..., as shown in Figure 41.

The coding sequence with the encoding device of the present embodiment is I2o, I2e, B0o, B0e, B1o, B1e, P5o P5e, B3o, B3e, B4o, B4e... .

With the sixth encoding device, shown in Figure 40, forward prediction from an odd field of the B-frame, as used in the fifth encoding device, is inhibited, as shown in Figure 42.

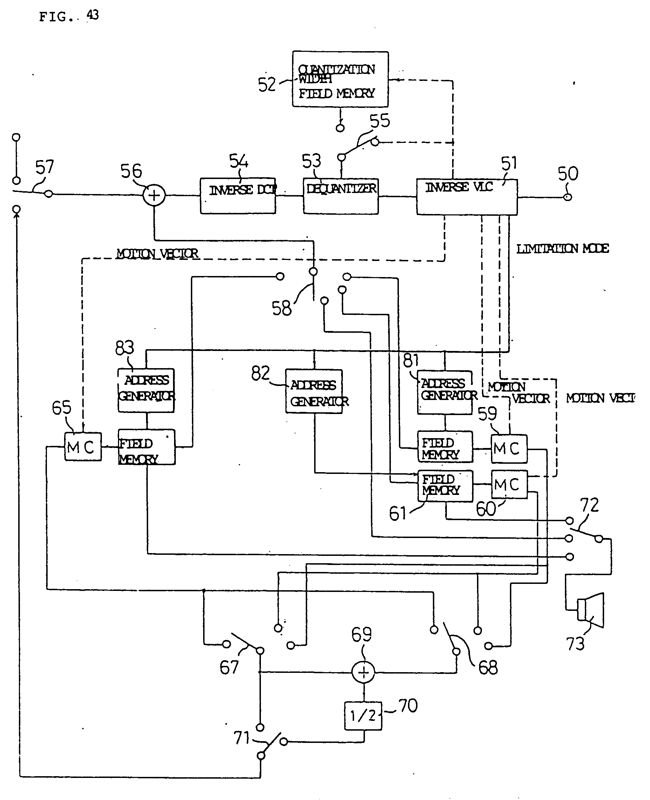

Consequently, the picture necessary for prediction may be decoded by a decoding device having a buffer provided with a frame (two fields) for backward prediction and a field for forward prediction, that is a buffer for three fields, as shown in Figure 43.

This will be explained by referring to Figure 41.

In using the frame buffer, decoded pictures of I- or P-frames are stored by changing over the field buffers in the sequence of the field buffers A, B, C, A, B, C, from field to field. When storage is initiated at the field buffer C, the contents of the field buffer A are displayed. Similarly, when storage is initiated at the field buffer A, the contents of the field buffer B are displayed, whereas, when storage is initiated at the field buffer B, the contents of the field buffer C are displayed. For decoding the B-frame, the encoded picture is not stored, but displayed instantly.

If the decoding is continued in this sequence, the following operation is incurred. At Io, since storage is initiated at the field buffer A, the contents of the field buffer B are displayed.

At Ie, since storage is initiated at the field buffer B, the contents of the field buffer C are displayed. If there is no previously decoded picture, the display contents become indefinite.

At time Io, I2o in its entirety and even components of the macro-block of the frame-based block-forming frame-based prediction mode of I2e are decoded and stored in field buffers A and B, respectively.

At time Ie, by motion-compensating the picture of the field buffer A, even components of the macro-block of the field-based block-forming field-based prediction mode of I2e are decoded and stored in field buffer B.

At time 2o, since the picture to be encoded is the B-frame, the pictures of the field buffers A, B and C are motion-compensated and B0o decoded. The decoded pictures are not stored but displayed instantly. The same may be said of B0e, B1o and B1e at time 2e, time 3o and at time 3e, respectively.

At time 4o, since storage is initiated at field buffer C, the contents of the field buffer A are displayed. At time 4e, since storage is initiated at field buffer A, the contents of the field buffer B are displayed.

At time 4o, the pictures of the field buffers A and B are motion-compensated and P3o in its entirety and even components of the macro-block of the frame-based block-forming frame-based prediction mode of P3e are decoded and stored in field buffers C and A.

At time 4e, by motion-compensating the pictures of the field buffers B, C and A, even components of the macro-block of the field-based block-forming field-based prediction mode of P3e are decoded and stored in field buffer A.

It is seen from above that, with the sixth encoding device, decoding is made possible by a frame buffer for three fields, that is one and a half frame, so that the buffer employed in the decoding device may be reduced in capacity, as shown in Figure 43 and the decoding device may be reduced in size and costs.

The output bit stream of the transmission buffer 16, shown in Figure 1, is multiplexed with encoded audio signals, synchronization signals etc., added to by error correction code data and modulated in a predetermined manner before being recorded on a recording medium, such as an optical disc, tape or a semiconductor memory, by means of a laser beam.

The bit stream is inputted to the decoder on a transmission medium, such as an optical disc. The playback data reproduced from the transmission medium is demodulated and corrected for errors. If the bit stream is multiplexed with audio signals, synchronization signals etc., it is separated from these signals.

Although the bit stream outputted from the encoder is recorded herein on the optical disc, it may also be transmitted to a transmission channel for ISDN or satellite communication.

With the above-described first and second high efficiency encoding devices, field-by-field moving pictures having little motion and/or acute motion may be processed efficiently on the field-by-field or frame-by-frame basis. Above all, with the second high efficiency encoding device, it is possible to predict an even-numbered field from an odd-numbered field of the current frame and to select the encoding with higher efficiency. Therefore, a high-quality moving picture may be reproduced by the high efficiency decoding device of the present invention despite the small volume of the transmitted information.

With the above-described third and fourth high efficiency encoding devices, since the frame prediction inhibiting mode is changed over to the mode of inhibiting prediction of the even-numbered field from the odd-numbered field of the current frame or vice versa on the frame-by-frame or slice-by-slice basis, address generating means for encoding and address generating means for decoding may be simplified to enable the hardware to be reduced in size.

With the fifth high efficiency encoding device, since the B-frame is processed in its entirety on the field-by-field basis, and the mode of inhibiting prediction of the even-numbered field from the odd-numbered field of the current frame is changed over on the frame-by-frame or slice-by-slice basis, it becomes possible to use the frame buffer having two frames or four fields for the decoding device.

With the sixth high efficiency encoding device, it becomes possible to use the frame buffer having one and a half frame, that is three fields.

The first to sixth decoding devices may be used in conjunction with the first to sixth encoding devices for realizing high efficiency decoding.

Since compressed data encoded by the above-described high efficiency encoding devices are recorded on the recording medium according to the present invention, it becomes possible to record more picture data, that is picture data of longer time duration, on the recording medium.

**Claims**

1. A picture signal encoding method for encoding interlaced picture signal data representing a sequence of pictures providing a substantially continuous video image, comprising the steps of;

receiving said picture signal data comprising a plurality of frames, each of said frames including first and second fields of picture data;

dividing said picture signal data into macroblocks, said macroblocks being formed of a two-dimensional array of pixels;

predictively encoding said interlace scanned picture data by adaptively selecting a field-base predictive encoding technique or a frame-base predictive encoding technique;

selecting field-based or frame-based orthogonal transformation for each macro-block; and

orthogonally transforming said picture signal data;

wherein said step of encoding includes generating header information for the encoded picture data, the header information comprising information identifying the type of predictive encoding utilized for each respective macroblock, data to identify the type of orthogonal transformation utilized for each respective macroblock and macroblock address information indicating the respective location of each macroblock.

**2.** A picture signal encoding method for encoding picture signal data according to claim 1, wherein

s    aid header information is generated to include macroblock type information which identifies the type of prediction associated with a respective macroblock.

**3.** A picture signal encoding method for encoding picture signal data according to claim 2, wherein

the type of prediction identified by said macroblock type information includes one of intra-prediction, forward prediction, backward prediction and bi-directional prediction.

**4.** An encoding apparatus for encoding interlaced picture signal data representing a sequence of pictures providing a substantially continuous video image, comprising:

means (1) for receiving input picture data in the form of frames, each frame having a pair of fields;

means (10, 11) for dividing said picture data into macroblocks, said macroblocks being formed of a two-dimensional array of pixels;

predictive encoding means (20) for encoding said input picture data in accordance with a frame prediction mode or a field prediction mode, including first mode selecting means (23, 24) for selecting said frame or field prediction mode;

transform encoding means (13) for encoding said first encoded data by frame-based orthogonal transformation or by field-based orthogonal transformation including second mode selecting means (25) for selecting said field- or frame-based orthogonal transformation mode; and

a header generator operable to generate header information for the respective macroblocks of the encoded picture data including data to identify the type of predictive coding for each macroblock, data to identify the type of orthogonal transformation for each macroblock and macroblock address information.

**5.** An encoding apparatus according to claim 4, wherein

said header generator is operable to generate header information that includes macroblock type information which identifies the type of prediction associated with a respective macroblock.

**6.** An encoding apparatus according to claim 5, wherein

the type of prediction identified by said macroblock type information includes one of intra-prediction, forward prediction, backward prediction and bi-directional prediction

**Patentansprüche**

**1.** Bildsignalkodier-Verfahren zum Kodieren verschachtelter Bildsignaldaten, die eine Folge von Bildern repräsentieren, die ein im wesentlichen fortlaufendes Videobild bereitstellt, mit Schritten zum

Empfangen der Bildsignaldaten, die eine Vielzahl von Vollbildern umfassen, wobei jedes der Vollbilder erste und zweite Halbbilder aus Bilddaten enthält,

Unterteilen der Bildsignaldaten in Makroblöcke, welche Makroblöcke aus einem zweidimensionalen Feld von Pixeln gebildet werden,

prädiktiven Kodieren der verschachtelt abgetasteten Bilddaten durch adaptives Auswählen einer halbbildbasierten Prädiktiv-Kodierungstechnik oder einer vollbildbasierten Frädiktiv-Kodierungstechnik,

Auswählen einer halbbildbasierten oder vollbildbasierten Orthogonal-Transformation für jeden Makroblock und Orthogonal-Transformieren der Bildsignaldaten,

wobei der Schritt zum Kodieren das Erzeugen von Vorsatzinformation für die kodierten Bilddaten enthält, die umfasst: Vorsatzinformation, welche die Art von Prädiktiv-Kodierung kennzeichnet, die für jeden jeweiligen Makroblock benutzt wird, Daten zum Kennzeichnen der Art von Orthogonal-Transformation, die für jeden jeweiligen Makroblock benutzt wird, und Makroblock-Adressinformation, die den jeweiligen Ort jedes Makroblocks angibt.

2. Bildsignalkodier-Verfahren zum Kodieren von Bildsignaldaten nach Anspruch 1, bei dem

die Vorsatzinformation derart erzeugt wird, dass sie Makroblockartinformation enthält, weiche die Art von Prädiktion kennzeichnet, die einem jeweiligen Makroblock zugeordnet wird.

3. Bildsignalkodier-Verfahren zum Kodieren von Bildsignaldaten nach Anspruch 2, bei dem die Art von Prädiktion, die durch die Makroblockarinformation gekennzeichnet wird, eine der Arten Intra-Prädiktion, Vorwärts-Prädiktion, Rückwärts-Prädiktion und Bidirektional-Prädiktion enthält.

4. Kodier-Vorrichtung zum Kodieren verschachtelter Bildsignaldaten, die eine Folge von Bildern repräsentieren, die ein im wesentlichen fortlaufendes Videobild bereitstellt, welche Vorrichtung umfasst:

ein Mittel (1) zum Empfangen von Eingangs-Bilddaten in Form von Vollbildern, wobei jedes Vollbild ein Paar von Halbbildern hat,
ein Mittel (10, 11) zum Unterteilen der Bilddaten in Makroblöcke, welche Makroblöcke aus einem zweidimensionalen Feld von Pixeln gebildet werden,
ein Prädiktivkodier-Mittel (20) zum Kodieren der Eingangs-Bilddaten in Übereinstimmung mit einem Vollbild-Prädiktionsmodus oder einem Halbbild-Prädiktionsmodus, das ein erstes Modus-Auswahlmittel (23, 24) zum Auswählen des Vollbild- oder Halbbild-Prädiktionsmodus enthält,
ein Transformationskodierungs-Mittel (13) zum Kodieren erster kodierter Daten durch eine vollbildbasierte Orthogonal-Transformation oder durch eine halbbildbasierte Orthogonal-Transformation, das ein zweites Modus-Auswahlmittel (25) zum Auswählen eines halbbild- oder vollbildbasierten Orthogonal-Transformationsmodus enthält, und
einen Vorsatz-Generator, der betreibbar ist, Vorsatzinformation für die jeweiligen Makroblöcke der kodierten Bilddaten zu erzeugen, die enthält: Daten zum Kennzeichnen der Art von Prädiktiv-Kodierung für jeden Makroblock, Daten zum Kennzeichnen der Art von Orthogonal-Transformation für jeden Makroblock und Makroblock-Adressinformation.

5. Kodier-Vorrichtung nach Anspruch 4, in der

der Vorsatz-Generator betreibbar ist, Vorsatzinformation zu erzeugen, die Makroblock-Artinformation enthält, welche die Art von Prädiktion kennzeichnet, die einem jeweiligen Makroblock zugeordnet wird.

6. Kodier-Vorrichtung nach Anspruch 5, wobei

die Art von Prädiktion, welche durch die Makroblock-Artinformation gekennzeichnet wird, eine der Arten Intra-Prädiktion, Vorwärts-Prädiktion, Rückwärts-Prädiktion und Bidirektional-Prädiktion enthält.

**Revendications**

1. Procédé de codage de signaux d'image destiné à coder des données de signaux d'image entrelacée représentant une séquence d'images réalisant une image vidéo pratiquement continue, comprenant les étapes consistant à :

recevoir lesdites données de signaux d'image comprenant une pluralité de trames, chacune desdites trames comprenant les premier et second balayages de trame des données d'image,
diviser lesdites données de signaux d'image en macro-blocs, lesdits macro-blocs étant formés d'une matrice bidimensionnelle de pixels,

coder de façon prédictive lesdites données d'image balayée entrelacée en sélectionnant de façon adaptative une technique de codage prédictif fondée sur un balayage de trame ou une technique de codage prédictif fondée sur une trame,

sélectionner une transformation orthogonale fondée sur un balayage de trame ou fondée sur une trame pour chaque macro-bloc, et

transformer par transformation orthogonale lesdites données de signaux d'image,

dans lequel ladite étape de codage comprend la génération d'informations d'en-tête pour les données d'image codées, les informations d'en-tête comprenant des informations identifiant le type de codage prédictif utilisé pour chaque macro-bloc respectif; des données destinées à identifier le type de transformation orthogonale utilisée pour chaque macro-bloc respectif et des informations d'adresse de macro-bloc indiquant l'emplacement respectif de chaque macro-bloc.

2. Procédé de codage de signaux d'image destiné à coder des données de signaux d'image selon la revendication 1, dans lequel

lesdites informations d'en-tête sont générées de façon à comprendre des informations de type de macro-bloc qui identifient le type de prédiction associé à un macro-bloc respectif.

3. Procédé de codage de signaux d'image destiné à coder des données de signaux d'image selon la revendication 2, dans lequel

le type de prédiction identifié par lesdites informations de type de macro-bloc comprend une prédiction parmi une intra-prédiction, une prédiction vers l'avant, une prédiction vers l'arrière et une prédiction bidirectionnelle.

4. Dispositif de codage destiné à coder des données de signaux d'image entrelacée représentant une séquence d'images fournissant une image vidéo pratiquement continue, comprenant :

un moyen (1) destiné à recevoir des données d'image d'entrée sous forme de trames, chaque trame comportant une paire de balayages de trame,

un moyen (10, 11) destiné à diviser lesdites données d'image en macro-blocs, lesdits macro-blocs étant formés d'une matrice bidimensionnelle de pixels,

un moyen de codage prédictif (20) destiné à coder lesdites données d'image d'entrée conformément à un mode de prédiction de trame ou à un mode de prédiction de balayage de trame, comprenant un premier moyen de sélection de mode (23, 24) destiné à sélectionner ledit mode de prédiction de trame ou de balayage de trame,

un moyen de codage par transformation (13) destiné à coder lesdites premières données codées par une transformation orthogonale fondée sur une trame ou par une transformation orthogonale fondée sur un balayage de trame comprenant un second moyen de sélection de mode (25) destiné à sélectionner ledit mode de transformation orthogonale fondée sur un balayage de trame ou sur une trame, et

un générateur d'en-tête pouvant être mis en oeuvre pour générer des informations d'en-tête pour les macro-blocs respectifs des données d'image codées comprenant des données pour identifier le type de codage prédictif pour chaque macro-bloc, des données pour identifier le type de transformation orthogonale pour chaque macro-bloc et des informations d'adresse de macro-bloc.

5. Dispositif de codage selon la revendication 4, dans lequel

ledit générateur d'en-tête peut être mis en oeuvre pour générer des informations d'en-tête qui comprennent des informations de type de macro-bloc qui identifient le type de prédiction associé à un macro-bloc respectif.

6. Dispositif de codage selon la revendication 5, dans lequel

le type de prédiction identifié par lesdites informations de type de macro-bloc comprend une prédiction parmi une intra-prédiction, une prédiction vers l'avant, une prédiction vers l'arrière et une prédiction bidirectionnelle.

FIG.1

EP 0 577 365 B1

FIG. 2

FIG. 3

FIG. 4

FIG. 5

EP 0 577 365 B1

FIG. 6

FIG. 7

FRAME PROCESSING MODE

FIELD PROCESSING MODE

FIG. 8

EP 0 577 365 B1

FIG. 9

ODD CYCLE

| Y 0 | Y 1 |
|-----|-----|
| Y 2 | Y 3 |
| Cr0 | Cb1 |

| Y 02o | Y13o |
|-------|------|
| Cr0   | Cb1  |

| Y 02e | Y13e |
|-------|------|

EVEN CYCLE

FIELD PROCESSING MODE

FRAME PROCESSING MODE

FIG. 10

35

FIG. 11

| | |
|---|---|
| Y0 | Y1 |
| Cb01 | Cr01 |
| Y2 | Y3 |
| Cb23 | Cb23 |

FRAME PROCESSING MODE

| | |
|---|---|
| Y02o | Y13o |
| Cb0123o | Cr0123o |
| Y02e | Y13e |
| Cb0123e | Cr0123e |

FIELD PROCESSING MODE

FIG. 12

ODD CYCLE

| | |
|---|---|
| Y0 | Y1 |
| Cb01 | Cr01 |
| Y2 | Y3 |
| Cb23 | Cr23 |

FRAME PROCESSING MODE

| | |
|---|---|
| Y02o | Y13o |
| Cb0123o | Cr0123o |

| | |
|---|---|
| Y02e | Y13e |
| Cb0123e | Cr0123e |

EVEN CYCLE

FIELD PROCESSING MODE

FIG. 13

|  | j = 0 | 1 | 2 | 3 | 4 |  |
|---|---|---|---|---|---|---|
| i = 0 → | MB (i, j) | MB(i, j+1) | - - - | - - - | - - | → |
| 1 → | MB(i+1, j) | MB(i+1, j+1) | - - - | - - - | - - | → |
| 2 → | ' | ' |  |  |  | → |
| 3 | ' | ' |  |  |  |  |
|  | ' | ' |  |  |  |  |

FIG. 14

MB(i, j)

| Y 0 | Y 1 |
|---|---|
| Cb01 | Cr01 |

MB(i, j+1)

| Y 0 | Y 1 |
|---|---|
| Cb01 | Cr01 |

MB(i+1, j)

| Y 0 | Y 1 |
|---|---|
| Cb01 | Cr01 |

MB(i+1, j+1)

| Y 0 | Y 1 |
|---|---|
| Cb01 | Cr01 |

FIG. 15

MBgo

MBg

| Y0o | Y1o |
|------|------|
| Cb01o | Cr01o |

| Y0e | Y1e |
|------|------|
| Cb01e | Cr01e |

MBge

MBg

MBgo

MBge

FIG. 16

FIG. 17

FIG. 18

FIG. 19

FIG. 46

FIG. 20

EP 0 577 365 B1

FIG. 21

FIG. 22

EP 0 577 365 B1

FRAME MEMORY GROUP 10

ADDRESS GENERATOR 35(e)

FIELD MOTION DETECTION 21

FRAME MOTION DETECTION 22

SELECTOR 24

LIMITATION MODE DECISION 34(e)

MOTION PREDICTION ORTHOGONAL TRANSFORM FRAME/FIELD PROCESSING MODE DECISION 33

DCT 13

QUANTIZER 14

VARIABLE LENGTH ENCODER 15

BUFFER 16

DEQUANTIZATION 17

INVERSE DCT 18

FRAME MEMORY WITH MOTION COMPENSATION 20

MDFM/MDFD

FDAD

FMAD

FMMV

FDMV

FMMV/FDMV

MPFM/MPFD

EN1/EN2

1

2

12

19

FIG. 23

```
START
```

S 2 1 — FIND MOTION VECTOR OF EACH MACRO-BLOCK

S 2 2 — FIND MEDIANS OF HORIZONTAL AND VERTICAL COMPONENTS OF EACH MOTION VECTOR(mv_x, mv_y)

S 2 3 — FIND MAGNITUDE OF VECTOR (mv_x, mv_y)

S 2 4 — CHANGE OVER LIMITATION MODE DEPENDING ON MAGNITUDE OF r

r<=threshold

FIRST LIMITATION MODE
S 2 5

SECND LIMITATION MODE — S 2 6

```
for(ii=0;ii<num __MB;ii++) {
  for(jj=ii;jj<num __MB;jj++) {
    if(dist __mvx[ii]>dist__mvx[jj]) {
      tmp=(dist __mvx[ii];
      dist __mvx[ii]=dist__mvx[jj];
      dist __mvx[jj]=tmp;
    }
  }
}
mv__x=dist__mvx[num __MB/2];
num __MB: NUMBER OF MACRO-BLOCKS
```

```
r=sqrt(mv__x * mv__x+mv__y * mv__y);
```

```
if(r<=threshold) {
  picture__structure=FRAME;
} else {
  picture__structure=FIELD;
}
FRAME: SECOND LIMITATION MODE
FIELD: FIRST LIMITATION MODE
```

FIG. 24

ODD(FIRST)FIELD

EVEN(SECOND)FIELD

MOTION VECTOR $M v_{1-2}$

EP 0 577 365 B1

FIG. 25

```
var1=0;
var2=0;
for(pix=0;pix<16pix++) {
 sum=0;
 for(line=0;line<16;line+=2) {
  sum+ = O(pix, line)-O(pix, line+1);
  }
var1+= sum* sum;
 sum=0;
 for(line=0;line<16;line+=4) {
  sum+ = O(pix, line)+
    O(pix, line+1) − O(pix, line+2)-
    O(pix, line+3)
  }
var2+= sum* sum;
}
.............
O(pix, line):16x16macroblock
```

```
if(num__field __mb<=threshold {
 picture__structure=FRAME;
} else {
 picture__structure=FIELD;
}
```

```
START

S 1 ──  FIND var1, var2
        AT EACH MACRO-BLOCK

S 2 ──  FIND NUMBER OF MACRO-BLOCKS
        (num_field_mb)SATISFYING
        var1 > =var2+offset

S 3     CHANGE OVER
        LIMITAION MODE BY
        num_field_mb

        (num__field __mb<=threshold

S 4 ─  FIRST LIMITAION MODE        S 5 ─  SECOND LIMITAION MODE
```

num __MB: NUMBER OF MACRO-BLOCKS
FRAME: SECOND LIMITAION MODE
FIELD: FIRST LIMITAION MODE

FIG. 26

START

S 1 1 — FIND SQUARE SUM OF DIFFERENCES BETWEEN CURRENT FRAME PICTUR AND DECODED PICTURE INDICATED BY MOTION VECTOR OF EACH MACRO-BLOCK

```
for(i=0;i<num __MB;i++)  {
 for(j=0;j<size;j++) {
  tmp=(local__decoded[j]
           -org__pixel[j]);
  me__frame+=tmp* tmp;
  }  :
}
```

```
if(me __frame <=me__field) {
 picture__structure=FRAME;
} else {
 picture__structure=FIELD;
}
```

S 1 2 — USE LIMITATION MODE WITH LESSER SQUARE SUM

me__frame <=me__field

S 1 3 — FIRST LIMITATION MODE          S 1 4 — SECON D LIMITATION MODE

num __MB : NUMBER OF MACRO-BLOCKS
local __decoded : DECODED PICTURE OF PREVIOUS F
org __pixel : ORIGINAL PICTURE OF CURRENT FRAM
me__frame : SQUARE SUM OF DIFFERENCE AT SECOND
             LIMITATION MODE
me__field : SQUARE SUM OF DIFFERENCES AT FIRST
             LIMITATION MODE
FRAME : SECOND LIMITATION MODE
FIELD : FIRST LIMITATION MODE

FIG. 27

```
var1=0;
var2=0;
for(pix=0;pix<16;pix++)  {
  sum=0;
  for(line=0;line<16;line+=2) {
    sum+= O (pix, line) - O (pix, line+1) ;
  }
var1+= sum* sum;
  sum=0;
  for(line=0;line<16;line+=4) {
    sum+= O (pix, line)+
        O (pix, line+1) - O (pix, line+2) -
        O (pix, line+3)
  }
var2+= sum* sum;
)
............
O (pix, line) :16x16macroblock
```

START

S 5 1 — FIND var1, var2 OF EACH MACRO-BLOCK BY RIGHT HAND EQUATIONS

S 5 2 — SUM var1, var2 OVER ENTIRE MACRO-BLOCKS (Var1, Var2)

```
if(Var1>=(Var2+offset))  {
  picture__structure=FRAME;
} else {
  picture__structure=FIELD;
}
```

S 5 3 — DECIDE LIMITATION MODE FROM RELATION BETWEEN Var1 AND Var2

Var1>=Var2+offset

S 5 4 — FIRST LIMITATION MODE

S 5 5 — SECOND LIMITATION MODE

num __NB :NUMBER OF MACRO-BLOCKS
FRAME: SECOND LIMITATION MODE
FIELD: FIRST LIMITATION MODE

FIG. 28

START

S 3 1 — FIND MOTION VECTOR OF EACH MACRO-BLOCK

S 3 2 — RE-CALCULATED EACH MOTION VECTOR IN TERMS OF UNIT VECTOR (n_x[i], n_y[i])

```
·n__x[i]=mv__x[i]/
    sqrt(mv__x[i]* mv__x[i]+
    mv__y[i]* mv__y[i]);
```

S 3 3 — SUM n_x AND n_y OVER ENTIRE MACRO-BLOCKS S_x, S_y

```
for (i=0;i<num__MB;i++)  {
    S__x+=n__x[i];
    S__y+=n__y[i];  }
```

S 3 4 — FIND R FROM R= sqrt(S__x* S__x +(S__y* S__y)/num__MB;

```
R= sqrt(S__x* S__x
    +(S__y* S__y)/num__MB;
```

S 3 5 — FIND Var2

```
if((Var2<=threshold)&&
(R<=threshold2)) {
  picture__structure=FRAME;
} else {
  picture__structure=FIELD;
}
```

S 3 6 — DECIDE LIMITATION MODE FROM RELATION BETWEEN R AND Var2

(Var2<= threshold) &&(R<= threshold2)

S 3 7 — FIRST LIMITATION MODE

SECOND LIMITATION MODE — S 3 8

num__MB: NUMBER OF MACRO-BLOCKS
FRAME: SECOND LIMITATION MODE
FIELD: FIRST LIMITATION MODE

FIG. 29

FIG. 30

EP 0 577 365 B1

FIG. 31

FIG. 32

EP 0 577 365 B1

54

FIG. 33

FIG. 34

EP 0 577 365 B1

FIG. 35

| TIME | 10 | 1e | 20 | 2e | 30 | 3e | 40 | 4e | 50 | 5e | 60 | 6e | .... |
|---|---|---|---|---|---|---|---|---|---|---|---|---|---|
| DECODING SEQUENCE | $I_{10}$ | | $B_{00}$ | | $P_{30}$ | | $B_{20}$ | | $P_{50}$ | | $B_{40}$ | | .... |
| | | $I_{1e}$ | | $B_{0e}$ | | $P_{3e}$ | | $B_{2e}$ | | $P_{5e}$ | | $B_{4e}$ | .... |

| DISPLAY SEQUENCE | | | $B_{00}$ | | $I_{10}$ | | $B_{20}$ | | $P_{30}$ | | $B_{40}$ | | .... |
|---|---|---|---|---|---|---|---|---|---|---|---|---|---|
| | | | | $B_{0e}$ | | $I_{1e}$ | | $B_{2e}$ | | $P_{3e}$ | | $B_{4e}$ | .... |

CONTENTS OF FRAME BUFFERS

| A | $I_{10} \longrightarrow P_{50} \longrightarrow$ | ... |
|---|---|---|
| | $(I_{1e})\ I_{1e} \longrightarrow (P_{5e})\ P_{5e} \longrightarrow$ | |
| B | $P_{30} \longrightarrow$ | ... |
| | $(P_{3e})\ P_{3e} \longrightarrow$ | |

EP 0 577 365 B1

FIG. 36

| TIME | 1o | 1e | 2o | 2e | 3o | 3e | 4o | 4e | 5o | 5e | 6o | 6e | .... |
|------|----|----|----|----|----|----|----|----|----|----|----|----|------|

DECODING SEQUENCE:

$I_{1o}$ $B_{0o}$ $P_{3o}$ $B_{2o}$ $P_{5o}$ $B_{4o}$ ....

$I_{1e}$ $B_{0e}$ $P_{3e}$ $B_{2e}$ $P_{5e}$ $B_{4e}$ ....

DISPLAY SEQUENCE

$B_{0o}$ $I_{1o}$ $B_{2o}$ $P_{3o}$ $B_{4o}$ ....

$B_{0e}$ $I_{1e}$ $B_{2e}$ $P_{3e}$ $B_{4e}$ ....

CONTENTS OF FRAME BUFFERS

| A | $I_{1o} \longrightarrow P_{5o} \longrightarrow$ ... |
|---|---|
|   | $(I_{1e})\ I_{1e} \longrightarrow (P_{5e})\ P_{5e} \longrightarrow$ . |
| B | $P_{3o} \longrightarrow$ ... |
|   | $(P_{3e})\ P_{3e} \longrightarrow$ |
| C | $B_{0o} \longrightarrow B_{2o} \longrightarrow B_{4o} \longrightarrow$ ... |
|   | $(B_{0e})\ B_{0e} \longrightarrow (B_{2e})\ B_{2e} \longrightarrow (B_{4e})\ B_{4e}$ |

EP 0 577 365 B1

FIG. 37

FIG. 38

FIG. 39

| TIME | 10 | 1e | 20 | 2e | 30 | 3e | 40 | 4e | 50 | 5e | 60 | 6e | 70 | 7e | · · · · |
|---|---|---|---|---|---|---|---|---|---|---|---|---|---|---|---|
| DECODING SEQUENCE | $I_{20}$ | | $B_{00}$ | | $B_{10}$ | | $P_{50}$ | | $B_{30}$ | | $B_{40}$ | | $P_{80}$ | | · · · · |
| | | $I_{2e}$ | | $B_{0e}$ | | $B_{1e}$ | | $P_{5e}$ | | $B_{3e}$ | | $B_{4e}$ | | $P_{8e}$ | · · · · |
| DISPLAY SEQUENCE | | | $B_{00}$ | | $B_{10}$ | | $I_{20}$ | | $B_{30}$ | | $B_{40}$ | | $P_{50}$ | | · · · · |
| | | | | $B_{0e}$ | | $B_{1e}$ | | $I_{2e}$ | | $B_{3e}$ | | $B_{4e}$ | | $P_{5e}$ | · · · · |

| | |
|---|---|
| A | $I_{20}$ ————————————————→ $P_{80}$ —→ · · · |
| | $(I_{2e})\ I_{2e}$ ————————————————→ $(P_{8e})\ P_{8e}$ · · · |
| B | $P_{50}$ ————————————————→ · · · |
| | $(P_{5e})\ P_{5e}$ ————————————————→ · · · |

EP 0 577 365 B1

FIG. 40

EP 0 577 365 B1

TIME    1 0   1 e   2 0   2 e   3 0   3 e   4 0   4 e   5 0   5 e   6 0   6 e   7 0   7 e · · · ·

DECODING SEQUENCE:   $I_{20}$    $B_{00}$    $B_{10}$    $P_{50}$    $B_{30}$    $B_{40}$    $P_{10}$    · · · ·

     $I_{2e}$    $B_{0e}$    $B_{1e}$    $P_{5e}$    $B_{3e}$    $B_{4e}$    $P_{1e}$ · · · ·

DISPLAY SEQUENCE:    $B_{00}$    $B_{10}$    $I_{20}$    $B_{30}$    $B_{40}$    $P_{50}$    · · · ·

     $B_{0e}$    $B_{1e}$    $I_{2e}$    $B_{3e}$    $B_{4e}$    $P_{5e}$ · · · ·

CONTENTS OF FRAME BUFFERS.

| A | $I_{20}$ ——————————————→ $(P_{5e})$ $P_{5e}$ ——————————————————→ · · · |
|---|---|
| B | $(I_{2e})$ $I_{2e}$ ——————————————————————→ $P_{10}$ ——→ · · · |
| C | $P_{50}$ ————————————————→ $(P_{1e})$ $P_{1e}$ · · · |

FIG. 41

FIG. 42

FIG. 43

FIG.44

FIG...45

VIDEO SEQUENCE LAYER

GOP LAYER

B B I B B P B P · · P B B P

PICTURE LAYER

Cr    Cb

LUMINANCE (Y)

BIDIRECTIONAL BACKWARD    WITHIN PICTURE BACKWARD

SLICE LAYER

MACRO-BLOCK LAYER

Y₀ Y₁    Cr    Cb    8 pixels
Y₂ Y₃    16 pixels    8 pixels 8 pixels
16 pixels

BLOCK LAYER    8 pixels

8 pixels